# EUROPÄISCHE PATENTSCHRIFT

(11) **EP 3 612 409 B1**
(45) Veröffentlichungstag und Bekanntmachung des Hinweises auf die Patenterteilung: **01.06.2022**
(21) Anmeldenummer: 18719519.3
(22) Anmeldetag: 19.04.2018
(51) Int. Cl.: B65G 54/00, B60L 13/03, B65G 45/00, B65G 54/02

(54) **ANTRIEBSMODUL UND LINEARTRANSPORTSYSTEM**
DRIVE MODULE AND LINEAR TRANSPORT SYSTEM
MODULE D'ENTRAÎNEMENT ET SYSTÈME DE TRANSPORT LINÉAIRE

(30) Priorität: 21.04.2017 DE 102017108557
(43) Veröffentlichungstag der Anmeldung: 26.02.2020
(73) Patentinhaber: Beckhoff Automation GmbH, 33415 Verl (DE)
(72) Erfinder: SINZENICH, Andreas, 33803 Steinhagen (DE); VORBOHLE, Thomas, 33397 Rietberg (DE); PRUESSMEIER, Uwe, 32657 Lemgo (DE)
(74) Vertreter: Patentanwaltskanzlei WILHELM & BECK
(86) Internationale Anmeldenummer: PCT/EP2018/060073
(87) Internationale Veröffentlichungsnummer: WO 2018/193047

(56) Entgegenhaltungen:
- WO-A1-2013/143783
- US-A1- 2003 230 941
- US-A1- 2016 164 395

## Beschreibung

Die Erfindung betrifft ein Antriebsmodul gemäß Patentanspruch 1 und ein Lineartransportsystem gemäß Patentanspruch 12.

Aus der DE 10 2012 204 916 A1 ist eine Statorvorrichtung für einen Linearmotor und ein lineares Transportsystem bekannt. Die Statorvorrichtung weist einen elektrisch bestrombaren Magnetfelderzeuger zum Bilden eines Magnetfeldes und eine erste Halteeinrichtung zum Halten des Magnetfelderzeugers auf. Der Magnetfelderzeuger ist an der ersten Halteeinrichtung befestigt und die erste Halteeinrichtung ist zumindest teilweise aus einem elektrisch und/oder magnetisch nichtleitenden Material gebildet.

Ferner sind auch aus der US 2003/0230941 A1, US 2015/0027860 A1, US 2010/0276256 A1, DE 10 2012 103 378 A1 und DE 10 2011 017 525 A1, US 2016/0164395 A1, WO 2013/143783 A1 weitere lineare Transportvorrichtungen bekannt.

Ferner ist aus der EP 2 560 904 B1 eine Transportvorrichtung zur Beförderung eines Produkts bekannt, wobei die Transportvorrichtung eine Vielzahl von unabhängig voneinander bewegbaren Förderelementen zum Fördern von Produkten, eine ortsfeste, umlaufend angeordnete Laufschiene, welche einen Laufpfad mit wenigstens einer Laufbahn für das Förderelement definiert und eine Linearmotorantriebsvorrichtung zum Antreiben der Förderelemente umfasst, wobei jedes Förderelement Permanentmagnete aufweist, die mit Spulen der Linearantriebsvorrichtung in Wirkverbindung stehen und wobei jedes Förderelement wenigstens ein erstes Teilelement und ein zweites Teilelement aufweist, welche mittels Gelenks gelenkig miteinander verbunden sind. Jedes Förderelement weist einen modularen Aufbau auf und die einzelnen Teilelemente einen gleichen Grundaufbau. Die Transporteinrichtung weist zahlreiche Hinterschneidungen und Spalten auf und ist somit aufwändig zu reinigen.

So können sich beispielsweise bei Einsatz der Transportvorrichtung bei der Herstellung von Lebensmitteln oder der Verpackung von Lebensmitteln in den Spalten und Hinterschneidungen Lebensmittelpartikel mit Keimen absetzen. Die Lebensmittelpartikel dienen dabei Keimen als Nährboden. Werden bei der Reinigung der Transporteinrichtung nicht alle Lebensmittelpartikel entfernt, kann die Transporteinrichtung die Keime bei der Herstellung der Lebensmittel auf die weiteren herzustellenden Lebensmittel übertragen und diese mit den Keimen infizieren.

Es ist Aufgabe der Erfindung, ein besonders leicht zu reinigendes Antriebsmodul und ein leicht zu reinigendes Lineartransportsystem bereitzustellen, das insbesondere in einem Bereich, in dem hohe Verschmutzungen auftreten und/oder das Antriebsmodul und das Lineartransportsystem besonders sauber sein müssen, eingesetzt werden kann.

Diese Aufgabe wird mittels eines Antriebsmoduls gemäß Patentanspruch 1 und eines Lineartransportsystems gemäß Patentanspruch 12 gelöst. Vorteilhafte Ausführungsformen sind in den abhängigen Ansprüchen angegeben.

Es wurde erkannt, dass ein leicht zu reinigendes Antriebsmodul dadurch bereitgestellt werden kann, dass das Antriebsmodul ein Gehäuse und einen Stator aufweist, wobei an dem Gehäuse eine Fördereinrichtung des Lineartransportsystems mit einer Magnetanordnung anordnenbar ist, wobei das Gehäuse eine erste Gehäuseschale und eine zweite Gehäuseschale umfasst, wobei die erste Gehäuseschale und die zweite Gehäuseschale gemeinsam einen ersten Gehäuseinnenraum begrenzen, wobei in dem ersten Gehäuseinnenraum der Stator angeordnet ist, wobei der Stator wenigstens eine Spulenanordnung mit wenigstens einer Wicklung und wenigstens einem Statorzahn umfasst, wobei der Statorzahn eine erste Stirnfläche und eine zur ersten Stirnfläche gegenüber angeordnete zweite Stirnfläche aufweist, wobei die erste Stirnfläche innenseitig der ersten Gehäuseschale und die zweite Stirnfläche innenseitig der zweiten Gehäuseschale angeordnet sind, wobei die Gehäuseschalen den Statorzahn gegenüber einer Umgebung abdecken, wobei die Spulenanordnung ausgebildet ist, schaltbar ein magnetisches Wanderfeld bereitzustellen, wobei das Wanderfeld an den Stirnflächen aus der Spulenanordnung austritt und die Gehäuseschalen durchdringt, um außenseitig des Gehäuses zur Ausbildung einer magnetischen Kopplung in Wirkverbindung mit der Magnetanordnung der Fördereinrichtung des Lineartransportsystems zu treten.

Dadurch wird ein Eindringen von aggressiven Reinigungsmedien, die dazu genutzt werden, um das Antriebsmodul von Verschmutzungen zu befreien und gegebenenfalls zu desinfizieren, in das Antriebsmodul vermieden. Durch die verbesserten Reinigungsmöglichkeiten werden Ablagerungsmöglichkeiten für Partikel, insbesondere Lebensmittelpartikel, die als Nährboden für Keime oder Pilze dienen können, zuverlässig entfernt. Ferner wird dadurch auf eine Keimübertragung auf ein Produkt, das mit dem Lineartransportsystem transportiert und/oder verarbeitet und/oder verpackt wird, vermieden. Ebenso wird eine Anhaftung von Partikeln an dem Antriebsmodul reduziert bzw. vermieden, so dass Reinigungsintervalle zur Reinigung des Antriebsmoduls gegenüber bekannten Antriebsmodulen verlängert sind. Dadurch eignet sich Antriebsmodul für den Einsatz in der Lebensmittelindustrie oder der pharmazeutischen Industrie, da mit dem Antriebsmodul hohe Hygienezertifizierungsstandards besonders gut erfüllt werden können. Ferner wird eine Korrosion am Stator durch die Gehäuseschalen vermieden.

In einer weiteren Ausführungsform weist die erste Gehäuseschale eine erste Außenseite und die zweite Gehäuseschalte eine zweite Außenseite auf, wobei die erste Außenseite und/oder die zweite Außenseite im Wesentlichen glatt ausgebildet ist, wobei das Gehäuse außenseitig einen Mittelrauwert aufweist, wobei der Mittelrauwert in einem Bereich von 0,2 µm bis 0,8 µm, insbesondere in einem Bereich von 0,4 µm bis 0,8 µm, liegt. Dadurch kann das Gehäuse besonders einfach gereinigt werden. Ferner wird eine Anlagerung von Schmutz und/oder Partikeln durch die glatte Ausgestaltung der Außenseite zuverlässig vermieden.

In einer weiteren Ausführungsform weist die erste Gehäuseschale eine erste Außenseite und die zweite Gehäuseschalte eine zweite Außenseite auf, wobei die erste Außenseite im Bereich der Spulenanordnung angeordnet ist, wobei die erste Außenseite im Wesentlichen plan ausgebildet ist. Ferner wird eine Partikelansammlung vermieden - insbesondere in schwer zu reinigenden Bereichen an Stößen, Ecken oder Hinterschneidungen - auf denen sich Keime oder Pilze anlagern können.

In einer weiteren Ausführungsform weist die erste Gehäuseschale eine erste Außenseite und die zweite Gehäuseschalte eine zweite Außenseite auf, wobei die erste Gehäuseschale eine erste Spulenaufnahme aufweist, wobei die erste Spulenaufnahme einen ersten Spulenaufnahmegrund aufweist, wobei der erste Spulenaufnahmegrund zwischen der ersten Außenseite und der ersten Stirnseite des Statorzahns angeordnet ist und den ersten Gehäuseinnenraum gegenüber der Umgebung abtrennt, wobei die erste Spulenaufnahme zumindest abschnittsweise korrespondierend zu der Spule ausgebildet ist, wobei die Spule, insbesondere der Statorzahn in die erste Spulenaufnahme eingreift und vorzugsweise mit der ersten Stirnfläche an dem ersten Spulenaufnahmegrund anliegt, wobei die zweite Gehäuseschale eine gegenüberliegend zur ersten Spulenaufnahme angeordnete zweite Spulenaufnahme aufweist, wobei die zweite Spulenaufnahme einen zweiten Spulenaufnahmegrund aufweist, wobei der zweite Spulenaufnahmegrund zwischen der zweiten Außenseite und der zweiten Stirnseite des Statorzahns angeordnet ist und den ersten Gehäuseinnenraum gegenüber der Umgebung abtrennt, wobei die zweite Spulenaufnahme zumindest abschnittsweise korrespondierend zu der Spule, vorzugsweise dem Statorzahn, ausgebildet ist, wobei die Spule, insbesondere der Statorzahn in die zweite Spulenaufnahme eingreift und vorzugsweise mit der zweiten Stirnfläche an dem zweiten Spulenaufnahmegrund anliegt. Dadurch kann eine Position der Spule innerhalb des ersten Gehäuseinnenraums zuverlässig festgelegt werden. Insbesondere kann ein Verrutschen der Spule durch den Eingriff in die erste Spulenaufnahme vermieden werden. Dadurch wird eine Korrosion an der Spulenanordnung, insbesondere am Statorzahn, vermieden.

In einer weiteren Ausführungsform sind für jede Spule, insbesondere für jeden Statorzahn, jeweils die erste Spulenaufnahme und die zweite Spulenaufnahme vorgesehen. Dadurch wird eine zuverlässige Positionierung und Befestigung der Spulenanordnung im ersten Gehäuseinnenraum sichergestellt.

In einer weiteren Ausführungsform weist die Spule eine Wicklung um den Statorzahn und eine elektrische Isolierung auf, wobei die Isolierung plattenartig ausgebildet ist und wenigstens eine erste Aussparung aufweist, wobei die erste Aussparung korrespondierend zum Statorzahn ausgebildet ist, wobei der Statorzahn die erste Aussparung durchgreift, wobei die Isolierung zumindest zwischen einer der beiden Gehäuseschalen und der Wicklung angeordnet ist und die Wicklung elektrisch gegenüber dem Gehäuse isoliert.

In einer weiteren Ausführungsform weist das Antriebsmodul eine Sensoreinheit zur Ermittlung einer Position der Fördereinrichtung an dem Antriebsmodul auf, wobei die erste Gehäuseschale auf einer zum ersten Gehäuseinnenraum abgewandten Seite einen zweiten Gehäuseinnenraum zumindest abschnittsweise begrenzt. In dem zweiten Gehäuseinnenraum ist die Sensoreinheit angeordnet. Dadurch kann das Antriebsmodul besonders kompakt ausgebildet sein.

In einer weiteren Ausführungsform weist das Gehäuse ein Abdeckelement auf. Die Sensoreinheit weist einen Sensor auf. Das Abdeckelement ist an der ersten Außenseite der ersten Gehäuseschale angeordnet und verschließt den zweiten Gehäuseinnenraum gegenüber der Umgebung. Der Sensor ist angrenzend an das Abdeckelement angeordnet, wobei vorzugsweise das Abdeckelement folienartig ausgebildet ist. Vorzugsweise ist das Abdeckelement flächig mit der ersten Außenseite verklebt. Dadurch wird sichergestellt, dass der Sensor Signale eines Signalbeeinflussers der Fördereinrichtung zuverlässig empfangen kann und auf Grundlage des erfassten Signals zuverlässig eine Position der Fördereinrichtung an dem Antriebsmodul ermitteln werden kann.

In einer weiteren Ausführungsform ist der erste Gehäuseinnenraum mit einer Vergussmasse verfüllt. Vorzugsweise ist die Vergussmasse wärmeleitend ausgebildet, um eine Wärme aus dem Stator abzuführen und den Stator zu kühlen. Vorzugsweise weist die Vergussmasse einen Kunststoff, insbesondere einen duroplastischen Kunststoff, insbesondere Polyurethan, auf.

In einer weiteren Ausführungsform weist das Gehäuse wenigstens ein erstes Verbindungsprofil und ein zweites Verbindungsprofil zur Positionierung der zweiten Gehäuseschale relativ zur ersten Gehäuseschale auf, wobei das erste Verbindungsprofil an der einen Gehäuseschale und das zweite Verbindungsprofil an der anderen Gehäuseschale angeordnet ist, wobei das erste Verbindungsprofil wenigstens eine Ausbuchtung und das zweite Verbindungsprofil eine zur Ausbuchtung korrespondierend ausgebildete Aufnahme aufweist, wobei die Ausbuchtung sich in Richtung der anderen Gehäuseschale erstreckt, wobei die Ausbuchtung in die Aufnahme eingreift und eine Position der zweiten Gehäuseschale relativ zu der ersten Gehäuseschale zumindest in eine erste Richtung festlegt.

In einer weiteren Ausführungsform weist das erste Verbindungsprofil wenigstens eine weitere Ausbuchtung und das zweite Verbindungsprofil eine zur weiteren Ausbuchtung korrespondierend ausgebildete weitere Aufnahme auf, wobei die weitere Ausbuchtung an der einen Gehäuseschale und die weitere Aufnahme an der anderen Gehäuseschale angeordnet sind, wobei die weitere Ausbuchtung sich in Richtung der anderen Gehäuseschale erstreckt, wobei vorzugsweise die Ausbuchtung und die weitere Ausbuchtung unterschiedlich zueinander ausgebildet sind, wobei die Aufnahme und die weitere Aufnahme vorzugsweise unterschiedlich zueinander ausgebildet sind, wobei die Aufnahme und die Ausbuchtung an einem Gehäuseseitenabschnitt des Gehäuses angeordnet sind, wobei die weitere Aufnahme und die weitere Ausbuchtung an einem weiteren Gehäuseseitenabschnitt des Gehäuses angeordnet sind, wobei vorzugsweise der Gehäuseseitenabschnitt und der weitere Gehäuseseitenabschnitt aneinander angrenzen, wobei die weitere Ausbuchtung in die weitere Aufnahme eingreift und eine Position der zweiten Gehäuseschale relativ zu der ersten Gehäuseschale zumindest in eine zweite Richtung quer zu der ersten Richtung festlegt. Dadurch kann zuverlässig die Position der zweiten Gehäuseschale relativ zu der ersten Gehäuseschale zweidimensional festgelegt werden.

In einer weiteren Ausführungsform ist ein Verbindungsmittel vorgesehen, wobei das Verbindungsmittel an der ersten Ausbuchtung angeordnet ist, wobei vorzugsweise das Verbindungsmittel mittig bezogen auf eine maximale Erstreckung eines der Komponente zugewandten Gehäuseseitenabschnitts des Gehäuses angeordnet ist. Dadurch wird ein Drehmoment aus der Komponente zuverlässig im Gehäuse abgestützt und eine Aufbiegung der Gehäuseschale zuverlässig vermieden.

In einer weiteren Ausführungsform weist das Gehäuse ein Dichtelement auf, wobei das Dichtelement ausgebildet ist, einen Spalt zwischen dem Antriebsmodul und einer weiteren Komponente, insbesondere einem weiteren Antriebsmodul des Lineartransportsystems, abzudichten, wobei vorzugsweise das erste Dichtelement umlaufend am Gehäuse angeordnet ist.

Ebenso wurde erkannt, dass ein verbessertes Lineartransportsystem dadurch bereitgestellt werden kann, dass das Lineartransportsystem wenigstens ein Antriebsmodul, wenigstens eine Fördereinrichtung und wenigstens eine Laufschiene aufweist, wobei das Antriebsmodul wie oben beschrieben ausgebildet ist, wobei die Laufschiene an dem Antriebsmodul befestigt ist, wobei die Fördereinrichtung eine Führungsanordnung mit wenigstens einer Laufrolle und wenigstens eine versetzt zu der Laufrolle angeordnete Magnetanordnung umfasst, wobei die Laufrolle zur Führung der Fördereinrichtung entlang der Laufschiene an der Laufschiene anliegt, wobei zum Antrieb der Fördereinrichtung die Magnetanordnung außenseitig des Gehäuses im Wanderfeld des Stators anordenbar ist.

In einer weiteren Ausführungsform weist die Fördereinrichtung einen Signalbeeinflusser auf, wobei der Signalbeeinflusser außenseitig an dem Abdeckelement angeordnet ist und ausgebildet ist, dem Sensor ein Signal bereitzustellen, wobei der Sensor ausgebildet ist, das Signal zu erfassen und der Verarbeitungseinheit bereitzustellen. Die Verarbeitungseinheit ist ausgebildet, auf Grundlage des bereitgestellten Signals eine Position der Fördereinrichtung an dem Antriebsmodul zu ermitteln. Dadurch kann das Wanderfeld besonders exakt positioniert werden, um die Fördereinrichtung mittels des Wanderfeldes entlang des Antriebsmoduls zu bewegen.

In einer weiteren Ausführungsform weist das Lineartransportsystem ein weiteres Antriebsmodul auf, wobei das weitere Antriebsmodul wie oben beschrieben ausgebildet ist, wobei die Laufschiene an dem Antriebsmodul an einer Seite und das weitere Antriebsmodul an einer weiteren Seite des Antriebsmoduls befestigt ist.

In einer weiteren Ausführungsform weist das Lineartransportsystem eine Vielzahl von Fördereinrichtungen auf, wobei die Fördereinrichtungen vorzugsweise identisch zueinander ausgebildet sind, wobei die Fördereinrichtungen durch das Antriebsmodul angetrieben werden.

Nachfolgend wird die Erfindung anhand von Figuren näher erläutert. Dabei zeigen:
Figur 1 eine perspektivische Darstellung eines Lineartransportsystems;
Figur 2 einen Ausschnitt A des in Figur 1 gezeigten Lineartransportsystems;
Figur 3 eine Explosionsdarstellung eines ersten Antriebsmoduls des in den Figuren 1 und 2 gezeigten Lineartransportsystems;
Figuren 4 bis 7 perspektivische Darstellungen einer ersten Gehäuseschale des in Figur 3 gezeigten ersten Antriebsmoduls;
Figur 8 eine perspektivische Darstellung einer zweiten Gehäuseschale des in Figur 3 gezeigten ersten Antriebsmoduls;
Figure 9 eine perspektivische Ansicht des ersten Antriebsmoduls;
Figuren 10 bis 11 perspektivische Ansichten des ersten Antriebsmoduls in einer zweiten Ausführungsform;
Figur 12 eine perspektivische Schnittansicht entlang einer in Figur 11 gezeigten Schnittebene A-A durch das in Figur 11 gezeigte erste Antriebsmodul;
Figuren 13 und 14 perspektivische Darstellungen des zweiten Antriebsmoduls; und
Figur 15 eine perspektivische Darstellung einer ersten Gehäuseschale des zweiten Antriebsmoduls.

Nachfolgend wird in den Figuren auf ein Koordinatensystem 5 Bezug genommen. Das Koordinatensystem 5 ist als Rechtssystem ausgebildet und weist eine x-Achse (Höhenrichtung), eine y-Achse (Längsrichtung) und eine z-Achse (Querrichtung) auf. Selbstverständlich kann das Koordinatensystem 5 auch andersartig ausgebildet sein.

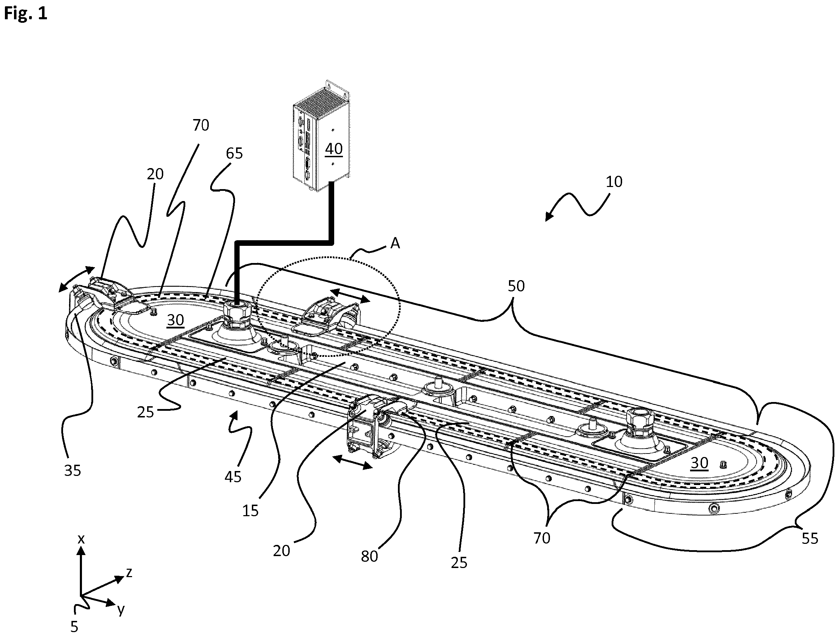

Figur 1 zeigt eine perspektivische Darstellung eines Lineartransportsystems 10.

Das Lineartransportsystem 10 weist mehrere identisch zueinander ausgebildete Fördereinrichtungen 20, ein erstes Antriebsmodul 25, fakultativ wenigstens ein zweites Antriebsmodul 30 und eine Laufschiene 35 auf. Innenseitig sind die Antriebsmodule 25, 30 an einem Maschinenbett 15 befestigt. Außenseitig ist umlaufend an den Antriebsmodulen 25, 30 die Laufschiene 35 angeordnet. Die Fördereinrichtung 20 ist an der Laufschiene 35 befestigt und umgreift zumindest teilweise das Antriebsmodul 25, 30.

In der hier dargestellten Ausführungsform sind pro Seite jeweils vier erste Antriebsmodule 25 in einer Reihe parallel zur y-Achse nebeneinander angeordnet, wobei an einem vorderen und hinteren Ende der Reihe der ersten Antriebsmodule 25 jeweils das zweite Antriebsmodul 30 angeordnet ist. Somit ergibt sich eine geschlossene, annähernd oval ausgebildete Form des Lineartransportsystems 10. Selbstverständlich können auch eine beliebige andere Anzahl an ersten Antriebsmodulen 25 und/oder anders geformte, insbesondere nur einen Winkelbereich von 22,5° oder 45° oder 90° oder einen beliebigen anderen Winkelbereich umfassende, zweite Antriebsmodule 30 zu einem erfindungsgemäßen Lineartransportsystem 10 zusammengesetzt werden. Dabei ist es noch nicht einmal zwingend erforderlich, dass dieses Lineartransportsystem 10 eine umlaufende geschlossene Kontur bildet.

In der Ausführungsform erstrecken sich das erste Antriebsmodul 25 und ein an dem ersten Antriebsmodul 25 angeordneter erster Laufschienenabschnitt 50 in Längsrichtung parallel zur y-Achse. Ein zweiter Laufschienenabschnitt 55 ist halbkreisförmig ausgebildet, wobei korrespondierend zu der Ausgestaltung des zweiten Laufschienenabschnitts 55 das zweite Antriebsmodul 30 halbkreisförmig ausgebildet und angeordnet ist.

Die Fördereinrichtung 20 ist gegenüber der Laufschiene 35 und dem Antriebsmodul 25, 30 bewegbar. In ihrer Bewegung wird die Fördereinrichtung 20 durch die Laufschiene 35 geführt. Dabei werden Kräfte, unter anderem beispielsweise Haltekräfte zum Transport eines Objekts an der Fördereinrichtung 20, von der Fördereinrichtung 20 an der Laufschiene 35 abgestützt. Die Kräfte werden von der Laufschiene 35 über das Antriebsmodul 25, 30 am Maschinenbett 15 abgestützt.

Das Lineartransportsystem 10 weist ferner ein Steuergerät 40 und eine Antriebseinrichtung 45 auf. Das Steuergerät 40 ist mit den Antriebsmodulen 25, 30 verbunden. Die Antriebseinrichtung 45 ist als Linearmotor ausgebildet, wobei die Antriebseinrichtung 45 einen Stator 65 (strichliert dargestellt) und für jede Fördereinrichtung 20 eine Magnetanordnung 80 aufweist. Der Stator 65 weist für jedes Antriebsmodul 25, 30 eine Spulenanordnung 70 auf(strichliert dargestellt). Die Spulenanordnung 70 ist parallel zu dem jeweils an dem Antriebsmodul 25, 30 angeordneten Laufschienenabschnitt 50, 55 ausgerichtet. So ist im ersten Antriebsmodul 25 die Spulenanordnung 70 geradlinig parallel zur y-Achse und parallel zum ersten Laufschienenabschnitt 50 verlaufend ausgerichtet, während hingegen im zweiten Antriebsmodul 30 die Spulenanordnung 70 bogenförmig verlaufend angeordnet ist. Die Spulenanordnungen 70 sind jeweils mit dem Steuergerät 40 verbunden. Jede der Spulenanordnungen 70 weist wenigstens eine Spule 130 auf.

Die Magnetanordnung 80 ist an der Fördereinrichtung 20 angeordnet. Die Magnetanordnung 80 ist jeweils seitlich des Stators 65 angeordnet.

Das Steuergerät 40 ist ausgebildet, einen Spulenstrom durch eine vordefinierte Anzahl von Spulen, also einen Stromfluss durch die vordefinierte Anzahl von Spulen, zu variieren. Der Spulenstrom erzeugt ein magnetisches Wanderfeld das mit der Magnetanordnung 80 wechselwirkt.

Das Steuergerät 40 ist dazu ausgebildet, die Bewegung der Fördereinrichtung 20 entlang der Laufschiene 35 zu steuern. Dabei steuert bzw. regelt das Steuergerät 40 die Spulenströme durch die Spulen derart, dass über die Wechselwirkung der Magnetanordnung 80 mit dem durch die Spulenströme erzeugten magnetischen Wanderfeld eine entlang bzw. längs des Antriebsmoduls 25, 30 gerichtete Kraft auf die Fördereinrichtung 20 ausgeübt wird. Dadurch kann jede Fördereinrichtung 20 eine zur anderen Fördereinrichtung 20 unterschiedliche Bewegung, beispielsweise eine unterschiedliche Bewegungsrichtung und/oder Beschleunigung und/oder Geschwindigkeit, durchführen.

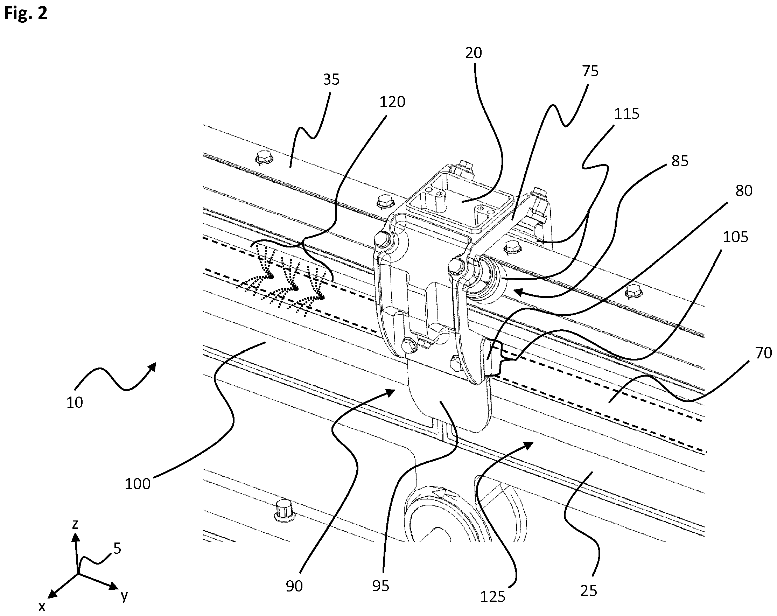

Figur 2 zeigt den Ausschnitt A des in Figur 1 gezeigten Lineartransportsystems 10 in einer in Richtung des Betrachters gekippten Lage.

Die Fördereinrichtung 20 weist einen Träger 75 und eine Führungsanordnung 85 auf. Der Träger 75 ist U-förmig, vorzugsweise Hufeisen-förmig ausgebildet und umgreift sowohl die Laufschiene 35 als auch einen außenseitigen Abschnitt des ersten Antriebsmoduls 25. Die Führungsanordnung 85 ist mit dem Träger 75 verbunden und positioniert die Fördereinrichtung 20 an der Laufschiene 35. Die Führungsanordnung 85 umfasst in der Ausführungsform mehrere Laufrollen 115, die an der Laufschiene 35 abrollen und somit die Fördereinrichtung 20 relativ verschiebbar gegenüber der Laufschiene 35 positionieren.

Zusätzlich umfasst das Lineartransportsystem 10 eine Positionserfassungseinrichtung 90. Die Positionserfassungseinrichtung 90 umfasst einen Signalbeeinflusser 95, der als Fahne ausgebildet und an einem Ende des Trägers 75 angeordnet ist. Der Signalbeeinflusser 95 ist plattenförmig ausgebildet, parallel zu einer ersten Außenseite 100 des ersten Antriebsmoduls 25 ausgerichtet und erstreckt sich in einer yz-Ebene. Der Signalbeeinflusser 95 ist beabstandet zu einer ersten Außenseite 100 des ersten Antriebsmoduls 25 angeordnet. Auf Höhe des Signalbeeinflussers 95 ist die erste Außenseite 100 plan ausgebildet.

Seitlich angrenzend an den Signalbeeinflusser 95 umfasst die Magnetanordnung 80 einen ersten Magnetanordnungsabschnitt 105. Auf einer dem ersten Magnetanordnungsabschnitt 105 gegenüberliegenden Seite umfasst die Magnetanordnung 80 einen zweiten Magnetanordnungsabschnitt (in Figur 2 durch die Laufschiene 35 und Teile des ersten Antriebsmoduls 25 verdeckt). Der Magnetanordnungsabschnitt 105 ist jeweils an dem Träger 75 befestigt. Jeder Magnetanordnungsabschnitt 105 kann ein oder mehreren Permanentmagneten, die in einer Reihe parallel zum ersten Laufschienenabschnitt 50 angeordnet sind, aufweisen.

Bei Aktivierung durch das Steuergerät 40 steuert bzw. regelt das Steuergerät die Spulenströme durch die Spulen 130 derart, dass über die Wechselwirkung der Magnetanordnung 80 mit dem durch die Spulenströme erzeugten magnetischen Wanderfelds eine entlang bzw. längs der Spulenanordnung gerichtete Kraft auf die Fördereinrichtung 20 ausgeübt wird.

Die Antriebseinrichtung 45 kann beispielsweise als ein Synchron-Linearmotor ausgebildet sein. In diesem Fall werden in den Spulen 130 Spulenströme erzeugt, die ein mehrphasiges Wechselstromsignal bilden. Die Anzahl der Phasen des Wechselstromsignals und die gegenseitige Phasenlage der einzelnen Spulenströme bestimmen sich dabei nach der Geometrie der Anordnung der Spulen entlang der Spulenanordnung und nach der Geometrie der Magnetanordnung.

Das Steuergerät 40 kann die Spulenanordnung 70 derart ansteuern, dass das Wanderfeld 120 bewegt wird. Durch die Kopplung der Magnetanordnung 80 mit dem Wanderfeld 120 wird die Fördereinrichtung 20 in der Bewegung des Wanderfelds 120 mitgenommen.

Das Antriebsmodul 25, 30 umfasst ein Gehäuse 125. In dem Gehäuse 125 ist die Spulenanordnung 70 angeordnet. Das Gehäuse 125 weist wenigstens einen der folgenden ersten Werkstoffe auf: einen lebensmitteltechnisch hygienischen Werkstoff, Edelstahl, insbesondere einen V4A-Stahl, Kunststoff, Polyethylen, Polytetrafluorethylen.

Das Gehäuse 125 ist außenseitig derart gestaltet, dass das Gehäuse 125 im Wesentlichen glatt ausgebildet ist. Dabei wird außenseitig an dem Gehäuse 125 auf Hinterschneidungen, (scharfkantige) Stöße, Vertiefungen oder Ähnliches verzichtet, sodass Anhaftungen von Verschmutzungen, beispielsweise Lebensmittelresten, besonders leicht von dem Gehäuse 125 entfernt werden können. Dadurch wird ein besonders hygienisches erstes Antriebsmodul 25, das insbesondere zur Herstellung von Lebensmitteln in der Lebensmittelindustrie einsetzbar ist, bereitgestellt.

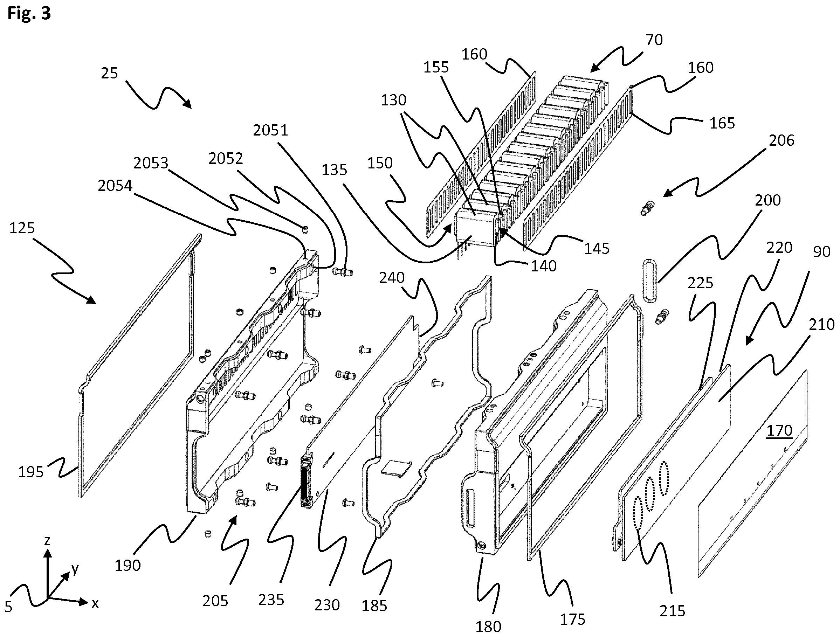

Figur 3 zeigt eine Explosionsdarstellung des ersten Antriebsmoduls 25 des in den Figuren 1 und 2 gezeigten Lineartransportsystems 10.

Die Spulenanordnung 70 des ersten Antriebsmoduls 25 weist in der Ausführungsform eine Vielzahl von Spulen 130 auf, die in einer Reihe parallel zur y-Achse, und somit parallel zum ersten Laufschienenabschnitt 55 nebeneinander angeordnet sind. Jede Spule 130 weist eine Wicklung 135 und wenigstens einen Statorzahn 140 auf. Eine Anzahl der Wicklungen 135 zu einer Anzahl von Statorzähnen 140 kann identisch oder unterschiedlich sein. Die Wicklung 135 ist umfangsseitig um den Statorzahn 140 angeordnet. Die Spulen 130 sind über die Länge des ersten Antriebsmoduls 25 angeordnet, über die die Fördereinrichtung während des Betriebs des Lineartransportsystems 10 verfahrbar ist. Im dargestellten Ausführungsbeispiel sind die Spulen 130 nicht überlappend angeordnet. Dabei sind die Spulen 130 zueinander jeweils in einem regelmäßigen Abstand nebeneinander angeordnet. In anderen Ausführungsbeispielen können die Spulen 130 aber auch überlappend angeordnet sein.

Der Statorzahn 140 weist jeweils eine erste Stirnfläche 145 und eine in Querrichtung zum ersten Laufschienenabschnitt 55 gegenüberliegend angeordnete zweite Stirnfläche 150 auf.

Die erste Stirnfläche 145 und die zweite Stirnfläche 150 sind parallel zueinander angeordnet. Die Spulenanordnung 70 umfasst zusätzlich zwischen zwei benachbart angeordneten Spulen 130 einen weiteren Statorzahn 155. Der weitere Statorzahn 155 ist identisch zu dem Statorzahn 140 ausgebildet. Der weitere Statorzahn 155 weist ebenso die erste und zweite Stirnfläche 145, 150 auf, wobei die erste Stirnfläche 145 des weiteren Statorzahns 155 in Querrichtung auf gleicher Höhe mit der ersten Stirnfläche 145 des Statorzahns 140 angeordnet ist. Ebenso ist die zweite Stirnfläche 150 des weiteren Statorzahns 155 in Querrichtung auf Höhe der zweiten Stirnseite 150 des Statorzahns 140 angeordnet. Um den weiteren Statorzahn 155 ist keine Wicklung 135 gewickelt.

Jede der Wicklungen 135 ist durch das Steuergerät 40 separat mit elektrischer Energie zur Erzeugung des Wanderfelds beaufschlagbar. Das Wanderfeld 120 wird durch den Statorzahn 140, 155 gerichtet und tritt aus den Stirnflächen 145, 150 aus der Spulenanordnung 70 aus.

Stirnseitig angrenzend an die Spule 130 ist eine plattenartig ausgebildete elektrische Isolierung 160 vorgesehen, wobei die Isolierung 160 wenigstens eine erste Aussparung 165 aufweist, wobei die erste Aussparung 165 korrespondierend zum Statorzahn 140, 155 ausgebildet ist. Der Statorzahn 140, 155 durchgreift die Isolierung 160. Eine Anzahl der vorgesehenen ersten Aussparungen 165 ist identisch zu einer Summe aus der Anzahl der Statorzähne 140 und der weiteren Statorzähne 155. Die Isolierung 160 ist beidseitig der Wicklungen 135 vorgesehen und in montiertem Zustand zwischen der Wicklung 135 und der Gehäuseschale 180, 190 angeordnet. Die Isolierung 160 isoliert elektrisch die Wicklung 135 gegenüber dem Gehäuse 125.

Das Gehäuse 125 weist ein Abdeckelement 170, ein erstes Dichtelement 175, eine erste Gehäuseschale 180, ein zweites Dichtelement 185, eine zweite Gehäuseschale 190, ein drittes Dichtelement 195 und ein viertes Dichtelement 200 auf. Zusätzlich weist das Gehäuse 125 ein erstes Verbindungsmittel 205 auf, um die erste Gehäuseschale 180 mit der zweiten Gehäuseschale 190 und ein zweites Verbindungsmittel 206 um das erste Antriebsmodul 25 mit dem weiteren ersten Antriebsmodul und/oder dem zweiten Antriebsmodul zu verbinden. Das erste Verbindungsmittel 205 besteht in dem dargestellten Ausführungsbespiel aus in die erste Gehäuseschale 180 eingeschraubten Verbindungsbolzen 2051, die in entsprechende Bohrungen 2052 eingreifen, welche in der zweiten Gehäuseschale 190 entsprechend ausgebildet sind. Zur Verbindung der beiden Gehäuseschalen 180, 190 werden in Querrichtung zur Längserstreckung des Verbindungsbolzens 2051 zugehörige Gewindestifte 2053 in korrespondierend angeordnete Schraublöcher 2054 geschraubt, die in eine Eindrehung des Verbindungsbolzens 2051 eingreifen und so ein Lösen der Gehäuseschalen 180, 190 in Längserstreckung des Verbindungsbolzens 2051 verhindern. Das zweite Verbindungsmittel 206 ist im Wesentlichen identisch zu dem ersten Verbindungsmittel 205 aufgebaut und verbindet zwei benachbart angeordnete Antriebsmodule 25 miteinander. Abweichend dazu ist der Verbindungsbolzen 2051 des zweiten Verbindungsmittels 206 länger als der Verbindungsbolzen 2051 des ersten Verbindungsmittels 205 ausgebildet.

Die Positionserfassungseinrichtung 90 umfasst zusätzlich zum Signalbeeinflusser eine Sensoreinheit 210 mit wenigstens einem Sensor 215, eine Sensorleiterplatte 220 und eine Verarbeitungseinheit 225. Der Sensor 215 ist auf der Sensorleiterplatte 220 angeordnet. Der Sensor 215 kann wenigstens eine Sensorwicklung aufweisen. Die Verarbeitungseinheit 225 ist beabstandet zu der Sensorleiterplatte 220 angeordnet und mittels der Sensorleiterplatte 220 elektrisch mit dem Sensor 215 verbunden.

Der Sensor 215 erfasst bei Positionierung des Signalbeeinflussers 95 in der Nähe des Sensors 215. Die Verarbeitungseinheit 225 ermittelt auf Grundlage des Sensorsignals eine Position des Signalbeeinflussers auf dem ersten Antriebsmodul 25 und stellt diese dem Steuergerät bereit.

Das erste Antriebsmodul 25 umfasst ferner eine Treibereinheit 230. Die Treibereinheit 230 weist eine erste Schnittstelle 235 und eine zweite Schnittstelle 240 auf. In Längsrichtung ist die erste Schnittstelle 235 gegenüberliegend zur zweiten Schnittstelle 240 angeordnet. Dabei ist in der Ausführungsform die erste Schnittstelle 235 als Buchsenkontakt ausgebildet, während hingegen die zweite Schnittstelle 240 als Steckkontakt ausgebildet ist. Die erste Schnittstelle 235 dient dazu, eine elektrische Verbindung zu der zweiten Schnittstelle des benachbarten Antriebsmoduls bereitzustellen.

Die Treibereinheit 230 ist ferner elektrisch mit jeder der Wicklungen 135 und mit dem Steuergerät verbunden. Dabei dient die Treibereinheit 230 dazu, die Wicklungen 135 zur Erzeugung des Wanderfelds auf Grundlage eines Steuersignals des Steuergeräts anzusteuern. Das Steuergerät ermittelt das Steuersignal auf Grundlage der Position des Signalbeeinflussers an dem Antriebsmodul.

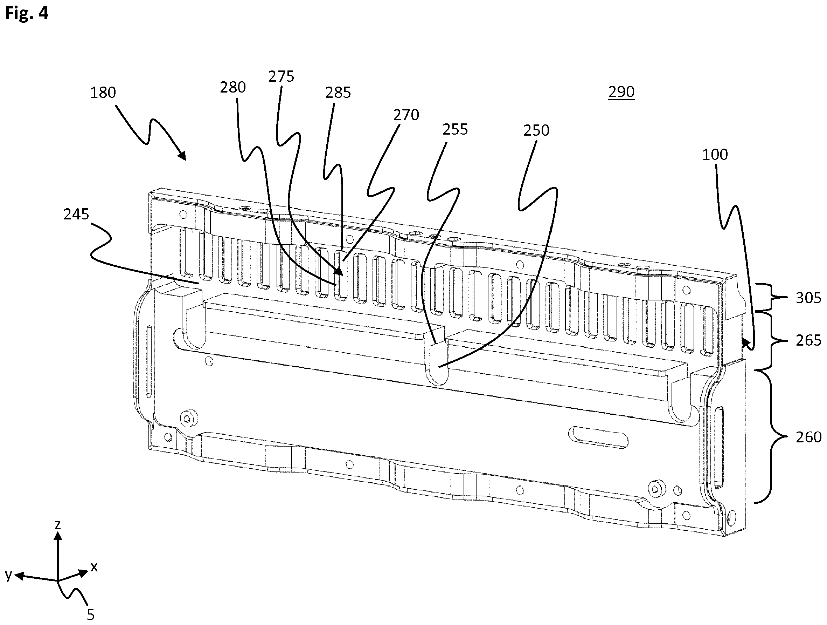

Figur 4 zeigt eine perspektivische Darstellung der ersten Gehäuseschale 180 des ersten Antriebsmoduls 25.

Die erste Gehäuseschale 180 weist die erste Außenseite 100 auf und begrenzt einen, auf einer dem Betrachter zugewandten Seite angeordneten ersten Gehäuseinnenraum 245 und einen, auf einer dem Betrachter abgewandten Seite der ersten Gehäuseschale 180 angeordneten zweiten Gehäuseinnenraum 250. Der erste Gehäuseinnenraum 245 ist mittels einer in der ersten Gehäuseschale 180 ausgebildeten zweiten Aussparung 255 mit dem zweiten Gehäuseinnenraum 250 fluidisch verbunden.

Die erste Gehäuseschale 180 weist einen ersten Gehäuseabschnitt 260, einen zweiten Gehäuseabschnitt 265 und einen dritten Gehäuseabschnitt 305 auf. Die Gehäuseabschnitte 260, 265, 305 erstrecken sich im Wesentlichen zweidimensional in Querrichtung und in Längsrichtung.

Der erste Gehäuseabschnitt 260 ist in Querrichtung versetzt zu dem zweiten Gehäuseabschnitt 265 und dem dritten Gehäuseabschnitt 305 angeordnet und mit dem zweiten Gehäuseabschnitt 265 verbunden, sodass die erste Gehäuseschale 180 eine gestufte Ausgestaltung aufweist. Der erste Gehäuseabschnitt 260 und der zweite Gehäuseabschnitt 265 erstrecken sich in jeweils parallel angeordneten yz-Ebenen. Die erste Außenseite 100 ist in Figur 4 rückseitig an dem zweiten Gehäuseabschnitt 265 und dem dritten Gehäuseabschnitt 305 angeordnet.

Der erste Gehäuseinnenraum 245 wird in Querrichtung vom zweiten Gehäuseinnenraum 250 durch den ersten bis dritten Gehäuseabschnitt 260, 265, 305 begrenzt.

Im zweiten Gehäuseabschnitt 265 weist die erste Gehäuseschale 180 auf einer zum ersten Gehäuseinnenraum 245 zugewandten Seite eine erste Spulenaufnahme 270 auf. Die erste Spulenaufnahme 270 ist korrespondierend zu der Anordnung des Statorzahns angeordnet. Vorzugsweise sind mehrere, korrespondierend zu der Anzahl der Statorzähne vorgesehenen ersten Spulenaufnahmen 270 in dem zweiten Gehäuseabschnitt 265 angeordnet.

Die erste Spulenaufnahme 270 weist einen ersten Spulenaufnahmegrund 275, eine erste Spulenaufnahmeseitenfläche 280 und eine erste Spulenaufnahmeöffnung 285 auf. Der erste Spulenaufnahmegrund 275 trennt den ersten Gehäuseinnenraum 245 gegenüber einer Umgebung 290 ab.

Die erste Spulenaufnahmeseitenfläche 280 weist einen im Wesentlichen korrespondierend zum Statorzahn 140, 155 ausgebildeten Querschnitt auf. Von besonderem Vorteil ist, dass die erste Spulenaufnahmeseitenfläche 280 von der ersten Spulenaufnahmeöffnung 285 zum ersten Spulenaufnahmegrund 275 hin sich zumindest abschnittsweise verjüngt.

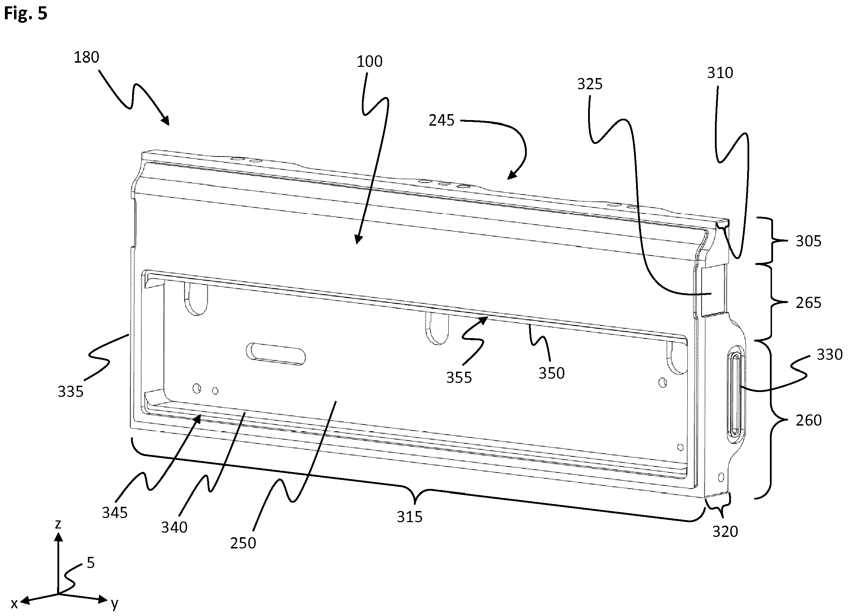

Figur 5 zeigt eine weitere perspektivische Darstellung der in den Figuren 3 und 4 gezeigten ersten Gehäuseschale 180.

Der dritte Gehäuseabschnitt 305 ist auf einer dem ersten Gehäuseabschnitt 260 abgewandten Seite des zweiten Gehäuseabschnitts 265 angeordnet und mit dem zweiten Gehäuseabschnitt 265 verbunden. Der dritte Gehäuseabschnitt 305 verjüngt sich mit zunehmender Höhe von dem ersten Gehäuseinnenraum 245 weg in Querrichtung.

Der erste Gehäuseabschnitt 260 begrenzt auf der zum ersten Gehäuseinnenraum 245 abgewandten Seite den zweiten Gehäuseinnenraum 250. Der zweite Gehäuseinnenraum 250 dient zur Aufnahme der Sensoreinheit und der Verarbeitungseinheit.

Die erste Gehäuseschale 180 weist ferner einen ersten bis vierten Gehäuseseitenabschnitt 310, 315, 320, 335 auf. Die Gehäuseabschnitte 310, 315, 320, 335 erstrecken sich auf einer gemeinsamen Seite des Gehäuseabschnitts 260, 265, 305 und sind rechteckförmig zueinander ausgerichtet.

Der erste Gehäuseseitenabschnitt 310 ist angrenzend an den dritten Gehäuseabschnitt 305 auf einer zum zweiten Gehäuseabschnitt 265 abgewandten Seite angeordnet, mit dem dritten Gehäuseabschnitt 305 verbunden und ist senkrecht gegenüber dem ersten und zweiten Gehäuseabschnitt 260, 265 ausgerichtet. Der erste Gehäuseseitenabschnitt 310 erstreckt sich in Längsrichtung im Wesentlichen über eine gesamte Längserstreckung der ersten Gehäuseschale 180 und begrenzt seitlich den ersten Gehäuseinnenraum 245. Ferner ist der erste Gehäuseseitenabschnitt 310 parallel zu der Laufschiene ausgerichtet.

In Querrichtung gegenüberliegend zum ersten Gehäuseseitenabschnitt 310 weist die erste Gehäuseschale 180 den zweiten Gehäuseseitenabschnitt 315 auf. Der zweite Gehäuseseitenabschnitt 315 grenzt an den ersten Gehäuseabschnitt 260 auf einer zum zweiten Gehäuseabschnitt 265 abgewandten Seite an, ist mit dem ersten Gehäuseabschnitt 260 verbunden und ist senkrecht zu dem ersten und zweiten Gehäuseabschnitt 260, 265 ausgerichtet. Der zweite Gehäuseseitenabschnitt 315 erstreckt sich in Längsrichtung über die gesamte Längserstreckung der ersten Gehäuseschale 180 und begrenzt seitlich den ersten Gehäuseinnenraum 245 und den zweiten Gehäuseinnenraum 250. Der erste Gehäuseseitenabschnitt 310 und der zweite Gehäuseseitenabschnitt 315 sind parallel ausgerichtet.

Der dritte Gehäuseseitenabschnitt 320 ist senkrecht zu dem Gehäuseabschnitt 260, 265 und zu dem ersten und/oder zweiten Gehäuseseitenabschnitt 310, 315 ausgerichtet und mit den Gehäuseabschnitten 260, 265, 305 und dem ersten und zweiten Gehäuseseitenabschnitt 310, 315 verbunden. Der dritte Gehäuseseitenabschnitt 320 begrenzt am ersten Gehäuseabschnitt 260 den ersten und zweiten Gehäuseinnenraum 245, 250 und am zweiten und dritten Gehäuseabschnitt 265, 305 den ersten Gehäuseinnenraum 245 in Längsrichtung (in Figur 5 auf einer dem Betrachter abgewandten Seite). Ferner ist im dritten Gehäuseseitenabschnitt 320 eine Nut 325 sowie eine dritte Aussparung 330 vorgesehen. Die dritte Aussparung 330 dient zur Aufnahme der ersten Schnittstelle und ist von einer analog zur Aussparung 330 ausgebildeten Nut umgeben, in der in montiertem Zustand des Lineartransportsystems das in Fig. 3 dargestellte vierte Dichtelement 200 angeordnet ist. Dabei ist die dritte Aussparung 330 korrespondierend zur ersten Schnittstelle 235 ausgebildet. Die Nut 325 erstreckt sich über die gesamte Höhe des dritten Gehäuseseitenabschnitts 320 und ist korrespondierend zu einer ersten Seite des weiteren Statorzahns ausgebildet. In der Nut 325 ist ein weiterer Statorzahn in montiertem Zustand des Lineartransportsystems angeordnet.

In Längsrichtung gegenüberliegend zum dritten Gehäuseseitenabschnitt 320 weist die erste Gehäuseschale 180 den vierten Gehäuseseitenabschnitt 335 auf. Der vierte Gehäuseabschnitt ist mit den Gehäuseabschnitten 260, 265, 305 und dem ersten und zweiten Gehäuseseitenabschnitt 310, 315 verbunden. Der vierte Gehäuseseitenabschnitt 335 begrenzt am ersten Gehäuseabschnitt 260 den ersten und zweiten Gehäuseinnenraum 245, 250 in Längsrichtung und am zweiten und dritten Gehäuseabschnitt 265, 305 (in Figur 5 auf einer dem Betrachter abgewandten Seite) den ersten Gehäuseinnenraum 245. In der Ausführungsform sind der vierte Gehäuseseitenabschnitt 335 und der dritte Gehäuseseitenabschnitt 320 parallel zueinander ausgerichtet und senkrecht zu dem ersten Gehäuseseitenabschnitt 310 und dem zweiten Gehäuseseitenabschnitt 315 ausgerichtet.

Am zweiten Gehäuseseitenabschnitt 315 ist ein erster Absatz 340 vorgesehen. Der erste Absatz 340 weist eine erste Auflagefläche 345 auf. Die erste Auflagefläche 345 ist in Querrichtung zwischen der ersten Außenseite 100 und dem ersten Gehäuseabschnitt 260 angeordnet. Die erste Auflagefläche 345 ist parallel zur ersten Außenseite 100 und zum ersten Gehäuseabschnitt 260 ausgerichtet.

Die erste Gehäuseschale 180 weist zur Verbindung des ersten Gehäuseabschnitts 260 mit dem zweiten Gehäuseabschnitt 265 einen zweiten Absatz 350 auf. Der zweite Absatz 350 weist eine auf einer der ersten Außenseite 100 zugewandten Seite des zweiten Absatzes 350 angeordnete zweite Auflagefläche 355 auf, wobei die zweite Auflagefläche 355 und die erste Auflagefläche 345 in einer gemeinsamen yz-Ebene angeordnet sind. Um einen in Längsrichtung besonders langen ersten Gehäuseinnenraum 245 bereitzustellen, wird auf die Anordnung eines Absatzes am dritten Gehäuseseitenabschnitt 320 und/oder am vierten Gehäuseseitenabschnitt 335 verzichtet.

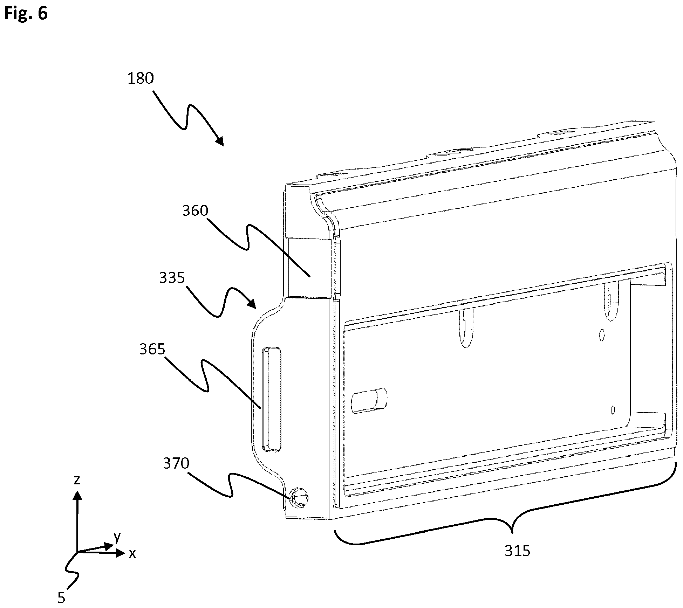

Figur 6 zeigt eine weitere perspektivische Darstellung der ersten Gehäuseschale 180 des in Figur 3 gezeigten ersten Antriebsmoduls 25.

Am vierten Gehäuseseitenabschnitt 335 ist ferner eine weitere Nut 360 angeordnet, wobei die weitere Nut 360 korrespondierend zu einer zweiten Seite eines weiteren Statorzahns ausgebildet ist. Vorteilhafterweise ist die weitere Nut 360 in z-Richtung auf Höhe der Nut 325 angeordnet. Die weitere Nut 360 und die Nut 325 begrenzen bei korrekter Ausrichtung des ersten Antriebsmoduls am zweiten Antriebsmodul einen Nutraum in dem ein einzelner weiterer Statorzahn 155 angeordnet ist.

Ferner ist an dem vierten Gehäuseseitenabschnitt 335 eine vierte Aussparung 365 vorgesehen. Die vierte Aussparung 365 ist korrespondierend zur ersten und/oder zweiten Schnittstelle 235, 240 ausgebildet. Durch die vierte Aussparung 365 wird die erste Schnittstelle in die zweite Schnittstelle eingeschoben.

Ferner ist am vierten Gehäuseseitenabschnitt 335 eine Bolzenaufnahme 370 vorgesehen, wobei die Bolzenaufnahme 370 in Höhenrichtung zwischen der vierten Aussparung 365 und dem zweiten Gehäuseseitenabschnitt 315 angeordnet ist. In die Bolzenaufnahme 370 greift in montiertem Zustand des Lineartransportsystems 10 der Verbindungsbolzen des zweiten Verbindungsmittels 206 ein, um die Antriebsmodule miteinander zu verbinden. Die vierte Aussparung 370 kann auch am dritten Gehäuseseitenabschnitt angeordnet sein.

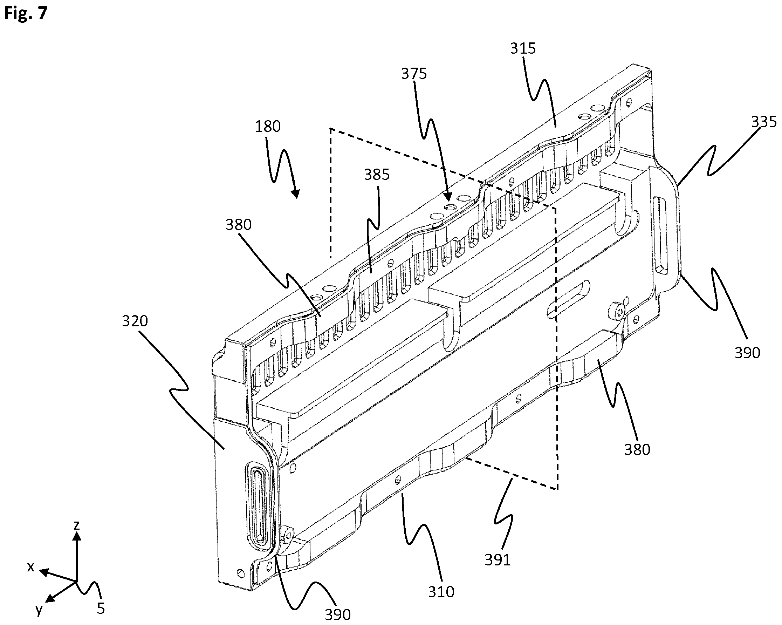

Figur 7 zeigt eine weitere perspektivische Darstellung der ersten Gehäuseschale 180.

Um die erste Gehäuseschale 180 relativ zur zweiten Gehäuseschale zuverlässig zu positionieren, weist das Gehäuse 125 an der ersten Gehäuseschale 180 ein erstes Verbindungsprofil 375 auf. Das erste Verbindungsprofil 375 weist am ersten Gehäuseseitenabschnitt 310 und am zweiten Gehäuseseitenabschnitt 315 mehrere in Längsrichtung beabstandet zueinander angeordnete und sich in Höhenrichtung erstreckende erste Ausbuchtungen 380 auf. Die erste Ausbuchtung 380 weist einen trapezförmigen Querschnitt auf. Die ersten Ausbuchtungen 380 sind in regelmäßigem Abstand angeordnet. Ferner weist das erste Verbindungsprofil 375 zwischen zwei benachbart angeordneten ersten Ausbuchtungen 380 ferner eine erste Aufnahme 385 auf.

Das erste Verbindungsprofil 375 weist zusätzlich eine zweite Ausbuchtung 390 auf. In der Ausführungsform ist jeweils je eine zweite Ausbuchtung 390 am dritten Gehäuseseitenabschnitt 320 und am vierten Gehäuseseitenabschnitt 335 spiegelsymmetrisch zu einer Symmetrieebene 391, die mittig als xz-Ebene zwischen dem dritten Gehäuseseitenabschnitt 320 und dem vierten Gehäuseseitenabschnitt 335 angeordnet ist, vorgesehen. Die zweite Ausbuchtung 390 ist unterschiedlich zur ersten Ausbuchtung 380 ausgebildet. Die zweite Ausbuchtung 390 erstreckt sich in Querrichtung und ist senkrecht zu der ersten Außenseite angeordnet.

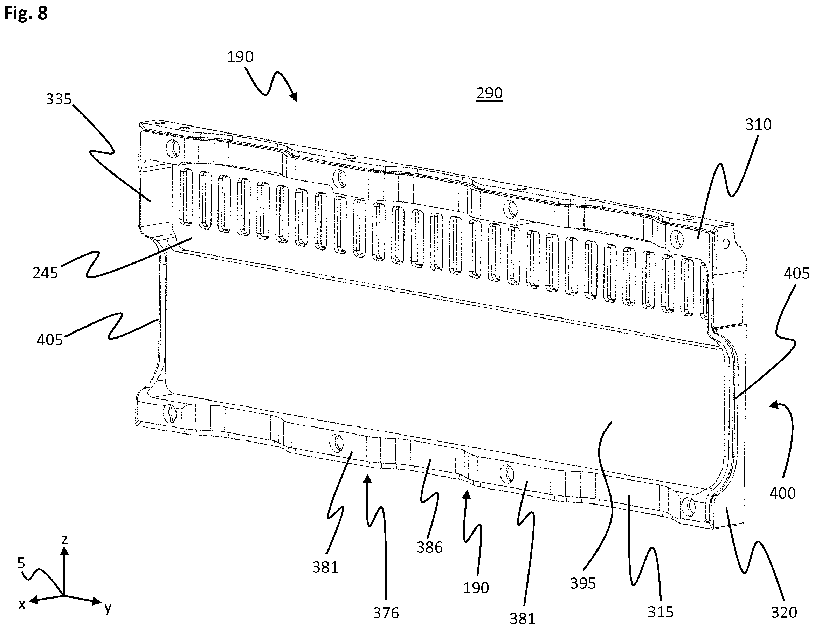

Figur 8 zeigt eine perspektivische Darstellung der zweiten Gehäuseschale 190 des in Figur 3 gezeigten ersten Antriebsmoduls.

Die zweite Gehäuseschale 190 dient zum Verschließen des ersten Gehäuseinnenraums 245 gegenüber der Umgebung 290 und gleichzeitig einer zuverlässigen Fixierung der Spulenanordnung in dem ersten Gehäuseinnenraum 245.

Die zweite Gehäuseschale 190 weist einen Deckelabschnitt 395 auf, der außenseitig eine zweite Außenseite 400 aufweist. Der Deckelabschnitt 395 erstreckt sich im Wesentlichen in einer yz-Ebene und ist parallel zum ersten und zweiten Gehäuseabschnitt ausgerichtet.

Seitlich auf einer der beiden Seiten des Deckelabschnitts 395 ist am Deckelabschnitt 395 jeweils der erste bis vierte Gehäuseseitenabschnitt 310, 315, 320, 335 angeordnet und mit dem Deckelabschnitt 395 verbunden. Die ersten bis vierten Gehäuseseitenabschnitte 310, 315, 320, 335 der zweiten Gehäuseschale 190 sind jeweils fluchtend zum ersten bis vierten Gehäuseseitenabschnitt der ersten Gehäuseschale angeordnet.

Die zweite Gehäuseschale 190 weist ein zweites Verbindungsprofil 376 auf, das korrespondierend zum ersten Verbindungsprofil ausgebildet ist. Das zweite Verbindungsprofil 376 weist an der zweiten Gehäuseschale 190 sowohl am ersten als auch am zweiten Gehäuseseitenabschnitt 310, 315 eine dritte Ausbuchtung 381 und eine zweite Aufnahme 386 auf, wobei die zweite Aufnahme 386 zwischen zwei dritten Ausbuchtungen 381 angeordnet ist.

Die dritte Ausbuchtung 381 ist korrespondierend zu der an der ersten Gehäuseschale angeordneten ersten Aufnahme ausgebildet. Ferner ist die an der zweiten Gehäuseschale 190 angeordnete zweite Aufnahme 386 korrespondierend zu der an ersten Gehäuseschale 180 angeordneten ersten Ausbuchtung ausgebildet. Ferner ist in Längsrichtung und in Querrichtung die dritte Ausbuchtung 381 an der zweiten Gehäuseschale 190 fluchtend, das heißt in y-Richtung und in z-Richtung jeweils gegenüberliegend, zu der ersten Aufnahme an der ersten Gehäuseschale und die zweite Aufnahme 386 an der zweiten Gehäuseschale 190 fluchtend zu der ersten Ausbuchtung an der ersten Gehäuseschale ausgerichtet.

Zusätzlich weist das zweite Verbindungsprofil 376 am dritten Gehäuseseitenabschnitt 320 und am vierten Gehäuseseitenabschnitt 335 jeweils eine dritte Aufnahme 405 auf. Die dritte Aufnahme 405 ist korrespondierend zu der zweiten Ausbuchtung an der ersten Gehäuseschale ausgebildet. Selbstverständlich kann auch die zweite Ausbuchtung 390 an der zweiten Gehäuseschale 190 und die dritte Aufnahme 405 an der ersten Gehäuseschale 180 angeordnet sein. Die dritte Aufnahme 405 ist jeweils fluchtend zu der zweiten Ausbuchtung an dem dritten Gehäuseseitenabschnitt und dem vierten Gehäuseseitenabschnitt der ersten Gehäuseschale angeordnet.

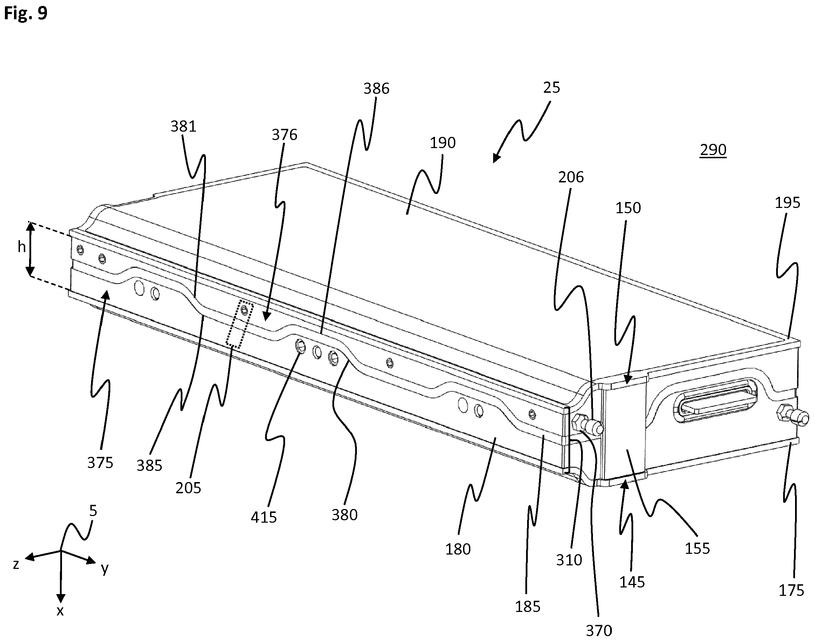

Figur 9 zeigt eine perspektivische Ansicht auf das erste Antriebsmodul 25.

In montiertem Zustand greifen das erste Verbindungsprofil 375 und das zweite Verbindungsprofil 376 ineinander ein. Dabei greift die erste Ausbuchtung 380 in die zweite Aufnahme 386 ein. Ferner greift die dritte Ausbuchtung 381 in die erste Aufnahme 385 ein. Dadurch wird eine Verschiebung der ersten Gehäuseschale 180 gegenüber der zweiten Gehäuseschale 190 in Längsrichtung vermieden. Zur Abdichtung des Gehäuseinnenraums gegenüber der Umgebung 290 ist das zweite Dichtelement 185 zwischen der ersten Gehäuseschale 180 und der zweiten Gehäuseschale 190 angeordnet. Von besonderem Vorteil ist hierbei, wenn das zweite Dichtelement 185 umlaufend ausgebildet ist.

Von besonderem Vorteil ist, wenn mittig bezogen auf eine maximale Höhe h des ersten Gehäuseseitenabschnitts 310 in der ersten Ausbuchtung 380 der ersten Gehäuseschale 180 wenigstens eine Gewindebohrung 415 angeordnet ist, in der ein weiteres Verbindungselement (nicht in Figur 9 dargestellt) befestigt werden kann, um die Laufschiene an dem ersten Antriebsmodul 25 zu befestigen.

Durch die mittige Anordnung bezogen auf eine maximale Höhe h des ersten Gehäuseseitenabschnitts 310 wird eine zuverlässige Abstützung der Laufschiene 35 an dem ersten Antriebsmodul 25 sichergestellt. Insbesondere kann dadurch die zweite Gehäuseschale 190 besonders dünnwandig ausgebildet werden, sodass die zweite Gehäuseschale 190 besonders kostengünstig und leicht ist. Die Abstützung der Kräfte aus der ersten Gehäuseschale 180 erfolgt über die erste Gehäuseschale 180 rückseitig am Maschinenbett.

Vorzugsweise wird die erste Gehäuseschale 180 mit der zweiten Gehäuseschale 190 mittels des ersten Verbindungsmittels 205 verbunden, wobei vorteilhafterweise das erste Verbindungsmittel 205 in Längsrichtung auf Höhe der dritten Ausbuchtung 381 und der ersten Aufnahme 385 angeordnet ist.

In der Nut 235 ist der weitere Statorzahn 155 angeordnet, wobei die Stirnflächen 145, 150 des weiteren Statorzahns 155 durch das erste Dichtelement 175 und das dritte Dichtelement 195 überdeckt sind.

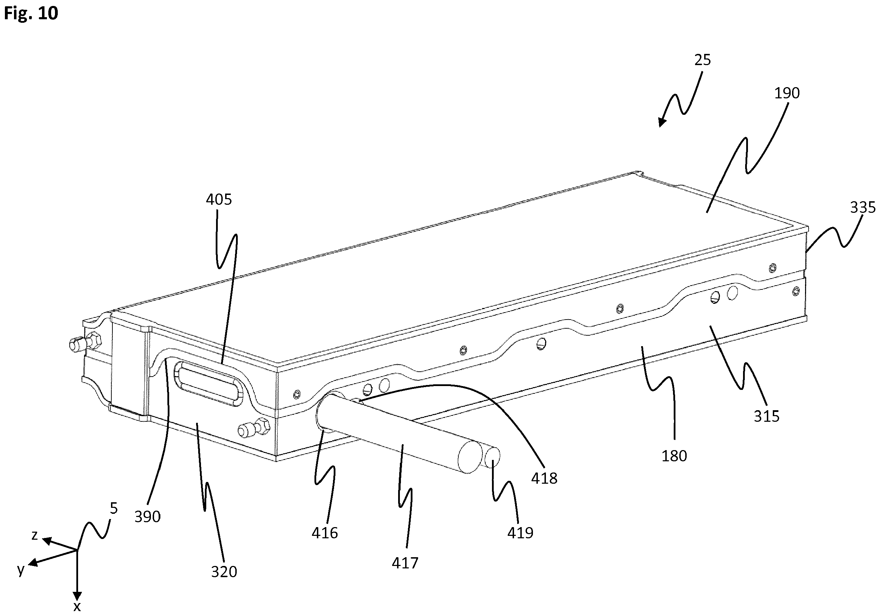

Figur 10 zeigt eine perspektivische Darstellung des ersten Antriebsmoduls 25 in einer zweiten Ausführung.

Am dritten und vierten Gehäuseseitenabschnitt 320, 335 greift die zweite Ausbuchtung 390 in die dritte Aufnahme 405 ein. Dadurch wird eine Verschiebung der ersten Gehäuseschale 180 gegenüber der zweiten Gehäuseschale 190 in eine zweite Richtung, in der Ausführungsform der Querrichtung vermieden. Somit ist sichergestellt, dass bei aufgesetzter zweiter Gehäuseschale 190 auf der ersten Gehäuseschale 180 sowohl die zweite Gehäuseschale 190 gegenüber der ersten Gehäuseschale 180 zuverlässig positioniert ist und gleichzeitig bei dem Verbinden der zweiten Gehäuseschale 190 mit der ersten Gehäuseschale 180 die zweite Gehäuseschale 190 nicht gegenüber der ersten Gehäuseschale 180 verrutschen kann.

In der hier dargestellten zweiten Ausführungsform des Antriebsmoduls 25 ist in der ersten Gehäuseschale 180 im zweiten Gehäuseseitenabschnitt 315 eine erste Durchführung 416 vorgesehen, durch die eine Stromversorgung 417 aus dem Maschinenbett in das erste Antriebsmodul 25 geführt ist. Ferner ist neben der ersten Durchführung 416 eine zweite Durchführung 418 angeordnet, durch die eine Datenverbindung 419 in das Antriebsmodul 25 geführt ist. Ferner kann der zweite Gehäuseabschnitt 315 am Maschinenbett befestigt werden.

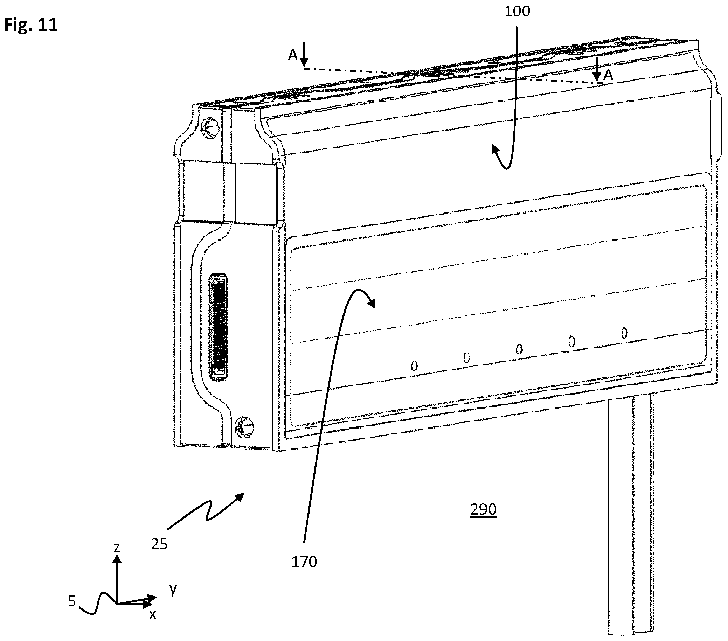

Figur 11 zeigt eine weitere perspektivische Ansicht des in Figur 10 dargestellten ersten Antriebsmoduls 25.

An der ersten Außenseite 100 ist das Abdeckelement 170 angeordnet. Das Abdeckelement 170 verschließt den unterseitig unter dem Abdeckelement 170 angeordneten zweiten Gehäuseinnenraum gegenüber der Umgebung 290.

Das Abdeckelement 170 ist folienartig ausgebildet. Dabei ist das Abdeckelement 170 mittels einer Klebschicht mit der ersten Außenseite 100 flächig verklebt.

Von besonderem Vorteil ist, wenn das Abdeckelement 170 zusammen mit der Klebschicht eine Wandstärke von etwa 200 bis 500 µm, besonders vorteilhafterweise eine Wandstärke von 300 bis 350 µm aufweist. Von besonderem Vorteil ist, wenn das Abdeckelement 170 einen zweiten Werkstoff aufweist, der medienbeständig, insbesondere gegenüber Fetten und Ölen, Wasser und/oder Säuren und/oder Basen, ist. Von besonderem Vorteil ist, wenn der zweite Werkstoff Polyester und/oder Autotex EBA aufweist. Zusätzlich kann das Abdeckelement 170 eine Lackschicht aufweisen, um den optischen Eindruck des ersten Antriebsmoduls 25 anzupassen.

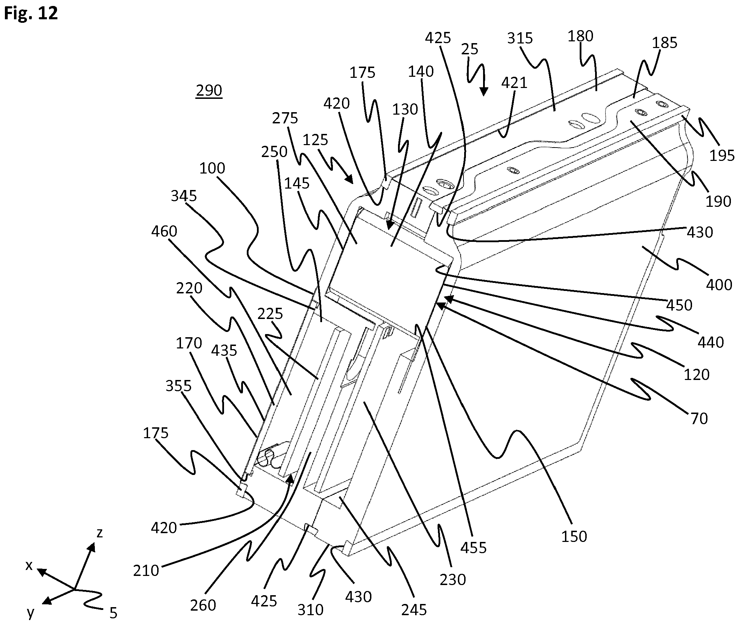

Figur 12 zeigt eine perspektivische Schnittansicht entlang einer in Figur 11 gezeigten Schnittebene A-A durch das in Figur 11 gezeigte erste Antriebsmodul 25. Die Schnittebene A-A ist als xz-Ebene ausgebildet.

Von besonderem Vorteil ist, wenn das Gehäuse 125 außenseitig glatt ausgebildet ist. Dabei wird unter glatt verstanden, dass außenseitig das Gehäuse 125 im Wesentlichen stufenlos ausgebildet ist und frei von Hinterschneidungen und/oder Stößen ist. Ferner ist von Vorteil, wenn das Gehäuse 125 außenseitig einen Mittelrauwert Rₐ aufweist, wobei der Mittelrauwert Rₐ in einem Bereich von 0,2 µm bis 0,8 µm, insbesondere in einem Bereich von 0,4 µm bis 0,8 µm, liegt. Die erste Außenseite 100 und die zweite Außenseite 400 sind überwiegend (50 %), vorzugsweise zu wenigstens 75 % der Fläche der Außenseite 100, 400, plan ausgebildet. Dadurch wird zuverlässig eine Anhaftung und/oder eine Verunreinigung des Gehäuses 125 außenseitig vermieden.

Umfangsseitig weist die erste Gehäuseschale 180 eine erste Dichtnut 420 auf. Die erste Dichtnut 420 ist im Wesentlichen allen Gehäuseseitenabschnitten 310, 315 folgend ausgebildet. In der ersten Dichtnut 420 ist das erste Dichtelement 175 angeordnet. Das erste Dichtelement 175 ist umlaufend ausgebildet, sodass eine zuverlässige Abdichtung an allen vier Gehäuseseitenabschnitten 310, 315 sichergestellt werden kann. Dadurch kann eine Eindringen von Medien in eine Spalt 421 zwischen dem ersten Antriebsmodul 25 und einer an dem ersten Antriebsmodul 25 angeordneten weiteren Komponente des Lineartransportsystems 10, beispielsweise der Laufschiene und/oder dem zweiten Antriebsmodul und/oder dem Maschinenbett und/oder einem weiteren ersten Antriebsmodul vermieden werden.

Ferner weist die erste Gehäuseschale 180 und die zweite Gehäuseschale 190 auf einer der jeweils anderen Gehäuseschale 180, 190 zugewandten Seite eine zweite Dichtnut 425 auf, wobei die zweite Dichtnut 425 in z-Richtung abschnittsweise in der ersten Gehäuseschale 180 und in der zweiten Gehäuseschale 190 angeordnet ist. In der zweiten Dichtnut 425 ist das zweite Dichtelement 185 angeordnet, um den Gehäuseinnenraum 245, 250 fluidisch gegenüber der Umgebung 290 abzudichten.

Die zweite Gehäuseschale 190 weist ferner auf einer der ersten Gehäuseschale 180 abgewandten Seite hin zur zweiten Außenseite 400 eine dritte Dichtnut 430 auf. Die dritte Dichtnut 430 ist in der Ausführungsform allen Gehäuseseitenabschnitten 310, 315 folgend umlaufend ausgebildet. In der dritten Dichtnut 430 ist das umlaufend ausgebildete dritte Dichtelement 195 angeordnet, um an allen vier Gehäuseseitenabschnitten 310, 315 den Spalt 421 am ersten Antriebsmodul 25 abzudichten.

Von besonderem Vorteil ist hierbei, wenn das erste Dichtelement 175 und/oder das zweite Dichtelement 185 und/oder das dritte Dichtelement 195 wenigstens einen der folgenden dritten Werkstoffe aufweist: Fluorketon, Fluorocarbon, Kautschuk, Fluorelastomer, Pigmentstoffe, die so ausgebildet sind, dass das Dichtelement 175, 185, 195, 200 Lichtwellen aus einem blauen Farbspektrum reflektiert.

In der Ausführungsform sind die Sensorleiterplatte 220 und der Sensor direkt angrenzend an das Abdeckelement 170 angeordnet. Vorzugsweise ist die Sensorleiterplatte 220 mit der Klebschicht 435, mit der das Abdeckelement 170 flächig mit der ersten Außenseite 100 verklebt ist, innenseitig am Abdeckelement 170 stoffschlüssig befestigt. Dadurch ist ein Abstand des Sensors zu dem Signalbeeinflusser der Fördereinrichtung besonders gering. Ferner wird durch die dünnwandige Ausgestaltung des Abdeckelements 170 eine zuverlässige Übertragung des Signals vom Signalbeeinflusser auf den Sensor durch das Abdeckelement 170 sichergestellt. Rückseitig zu dem Abdeckelement 170 liegt die Sensorleiterplatte 220 auf der ersten Auflagefläche 345 an einer ersten Seite und auf der zweiten Auflagefläche 355 an einer zweiten Seite auf, sodass rückseitig die Sensorleiterplatte 220 zuverlässig in dem zweiten Gehäuseinnenraum 250 positioniert ist.

Zwischen der Sensorleiterplatte 220 und dem ersten Gehäuseabschnitt 260 der ersten Gehäuseschale 180 ist die Verarbeitungseinheit 225 der Sensoreinheit 210 angeordnet. Die Verarbeitungseinheit 225 ist an dem ersten Gehäuseabschnitt 260 befestigt.

In Querrichtung zwischen der zweiten Gehäuseschale 190 und dem ersten Gehäuseabschnitt 260 ist im ersten Gehäuseinnenraum 245 die Treibereinheit 230 angeordnet. Die Treibereinheit 230 ist an dem ersten Gehäuseabschnitt 260 der ersten Gehäuseschale 180 befestigt.

Die Spulenanordnung 70 erstreckt sich in Längsrichtung des Gehäuses 125. Dabei sind der Statorzahn 140 und der weitere Statorzahn quer (x-Richtung verlaufend) in dem ersten Gehäuseinnenraum 125 angeordnet. Die Außenseite 100, 400 ist parallel zur Stirnfläche 145, 150 des Statorzahns 140 und senkrecht zum Statorzahn ausgerichtet.

Um ein Verrutschen der Spulenanordnung 70 in dem Gehäuse 125 zu verhindern, weist die zweite Gehäuseschale 190 zusätzlich eine auf einer zum ersten Gehäuseinnenraum 245 zugewandten Seite angeordnete zweite Spulenaufnahme 440 auf. Die zweite Spulenaufnahme 440 weist einen zweiten Spulenaufnahmegrund 445, eine zweite Spulenaufnahmeseitenfläche 450 und eine zweite Spulenaufnahmeöffnung 455 auf. Die zweite Spulenaufnahme 440 ist identisch zur ersten Spulenaufnahme 270 ausgebildet, sodass sich die zweite Spulenaufnahmeseitenfläche 450 von der zweiten Spulenaufnahmeöffnung 455 hin zum zweiten Spulenaufnahmegrund 445 verjüngt. Der zweite Spulenaufnahmegrund 445 begrenzt den ersten Gehäuseinnenraum 245 hin zur zweiten Außenseite 400 und dichtet den ersten Gehäuseinnenraum 245 gegenüber der Umgebung 290 ab.

Dabei ist von besonderem Vorteil, wenn die Wandstärke des Spulenaufnahmegrunds 275, 445 zu der ersten Außenseite 100, 400 besonders gering ist. Von besonderem Vorteil ist, wenn hierbei die Wandstärke an dem Spulenaufnahmegrund 275, 445 in einem Bereich von 100 µm bis 500 µm, vorteilhafterweise in einem Bereich von 250 µm bis 350 µm liegt. Dadurch wird ein Austreten des Wanderfelds 120 und ein Wirken des Wanderfelds 120 auf die Magnetanordnung der Fördereinrichtung zuverlässig sichergestellt. Insbesondere wird ein Abstand zwischen der Magnetanordnung und der Spulenanordnung 70 besonders gering gehalten.

Ferner ist von Vorteil, wenn die erste Stirnseite 145 des Statorzahns 140 an dem ersten Spulenaufnahmegrund 275 anliegt und der Statorzahn 140 in die zweite Spulenaufnahme 440 derart eingreift, dass die zweite Stirnseite 150 des Statorzahns 140 an dem zweiten Spulenaufnahmegrund 445 anliegt. Dadurch wird ein Verkippen der Spule 130 in dem ersten Gehäuseinnenraum 245 zuverlässig vermieden und ferner kann gleichzeitig der Bauraumbedarf in Querrichtung für das erste Antriebsmodul 25 besonders gering gehalten werden.

Eine besonders stabile Befestigung der Spulen 130 in dem Gehäuse 125 wird dann sichergestellt, wenn für jede Spule 130, vorzugsweise für jeden Statorzahn 140, jeweils eine erste Spulenaufnahme 270 und eine zweite Spulenaufnahme 440 vorgesehen ist. Dies ist insbesondere dann von Vorteil, wenn der weitere Statorzahn identisch zum Statorzahn 140 ausgebildet ist und für jede Spule 130 jeweils der Statorzahn 140 und der weitere Statorzahn 155 vorgesehen ist.

Von besonderem Vorteil ist, wenn im Wesentlichen vollständig der erste Gehäuseinnenraum 245 und/oder der zweite Gehäuseinnenraum 250 mit einer Vergussmasse 460 verfüllt ist. Vorzugsweise ist die Vergussmasse 460 wärmeleitend ausgebildet, sodass eine Wärme aus der Spulenanordnung 70 durch die Vergussmasse 460 zuverlässig abgeführt wird und die Spulenanordnung 70 dadurch gekühlt wird. Dadurch wird eine Überhitzung der Spulenanordnung 70, insbesondere der Spulen 135, zuverlässig vermieden. Von besonderem Vorteil ist, wenn die Vergussmasse 460 einen Kunststoff, insbesondere einen duroplastischen Kunststoff, insbesondere ein Polyurethan, aufweist. Ferner fixiert die Vergussmasse 460 die im Gehäuseinnenraum 245, 250 angeordneten Komponenten, insbesondere die Treibereinheit 230 und die Sensoreinheit 210.

Ferner wird ein Ablösen der Gehäuseschalen 180, 190 voneinander vermieden. Des Weiteren verhindert die Vergussmasse 460 ein Eindringen von Flüssigkeit und somit eine Beschädigung von elektrischen und/oder elektronischen Komponenten der Sensoreinheit 210 und der Treibereinheit 230.

Wird die Vergussmasse 460 in den Gehäuseinnenraum 245, 250 gefüllt, so tritt die Vergussmasse 460 aus dem einen Gehäuseinnenraum, beispielsweise dem zweiten Gehäuseinnenraum 250, über die zweite Aussparung 255 in den ersten Gehäuseinnenraum 245 ein, sodass auch nur beim Einfüllen der Vergussmasse 460 in einen der beiden Gehäuseinnenräume 245, 250 beide Gehäuseinnenräume 245, 250 zuverlässig durch die Vergussmasse 460 verfüllt werden.

In der Montage des ersten Antriebsmoduls 25, werden in einem ersten Montageschritt die Spulenanordnung 70, die Sensoreinheit 210 und die Treibereinheit 230 in der ersten Gehäuseschale 180 montiert. Dadurch können alle Toleranzketten des ersten Antriebsmoduls 25 auf der erste Gehäuseschale 180 basieren. Auch sind die Toleranzketten durch die Referenz auf die erste Gehäuseschale 180 kurz gehalten, so dass das erste Antriebsmodul 25 eine hohe Präzision aufweist.

In einem zweiten Montageschritt wird nach Montage der Komponenten an der ersten Gehäuseschale 180 die zweite Gehäuseschale 190 an der ersten Gehäuseschale 180 befestigt und der erste Gehäuseinnenraum 245 dadurch verschlossen.

In einem dritten Montageschritt wird die Vergussmasse 460 in den zweiten Gehäuseinnenraum 250 eingebracht. Die Vergussmasse 460 fließt über die zweite Aussparung 255 in den ersten Gehäuseinnenraum 245.

In einem vierten Montageschritt wird nach zumindest teilweisem Aushärten der Vergussmasse das Abdeckelement 170 aufgebracht und das Gehäuse 125 dadurch vollständig verschlossen.

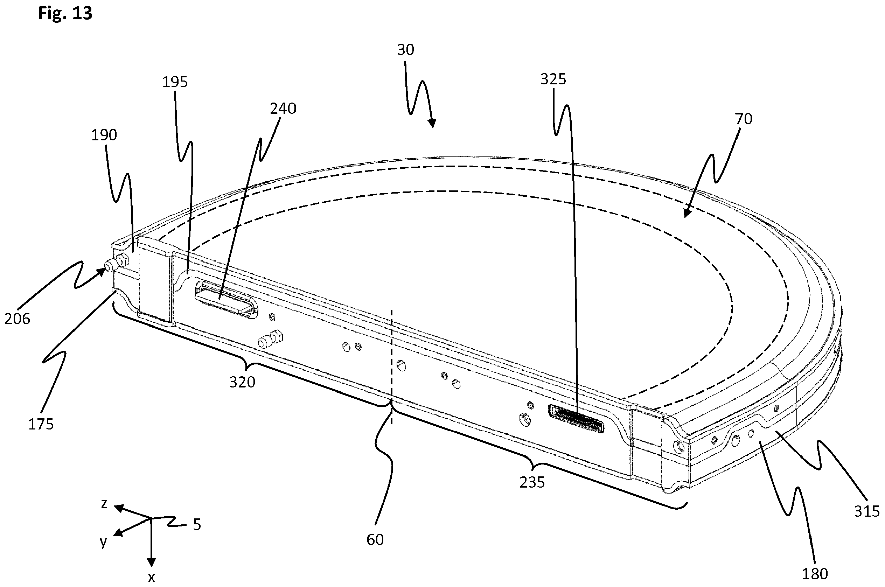

Figur 13 zeigt eine perspektivische Darstellung des zweiten Antriebsmoduls 30.

Das zweite Antriebsmodul 30 ist im Wesentlichen identisch zu dem ersten Antriebsmodul ausgebildet. Abweichend dazu ist das zweite Antriebsmodul 30 bogenförmig um eine Mittelachse 60 verlaufend ausgebildet. Dadurch kann auf den zweiten Gehäuseseitenabschnitt verzichtet werden. Der erste Gehäuseseitenabschnitt 310 ist außenseitig des zweiten Antriebsmoduls 30 angeordnet und auf einer Kreisbahn um die Mittelachse 60 verlaufend angeordnet. Dabei schließt der erste Gehäuseseitenabschnitt 310 einen Winkel von 180° ein. Selbstverständlich können der erste Gehäuseseitenabschnitt 310 und/oder das zweite Antriebsmodul 30 einen anderen Winkel einschließen. Auch kann die Bogenform anders als gezeigt ausgebildet sein. Beispielsweise kann es sich bei der Bogenform um eine Klothoide handeln.

Der dritte und vierte Gehäuseseitenabschnitt 320, 335 sind in einer gemeinsamen xz-Ebene angeordnet. Durch das zweite Verbindungsmittel 206, das in der Ausführungsform als Einschraubbolzen ausgebildet ist, kann am dritten Gehäuseseitenabschnitt 320 das erste Antriebsmodul befestigt werden. Am vierten Gehäuseseitenabschnitt 335 des zweiten Antriebsmoduls 30 kann ein weiteres erstes Antriebsmodul mit seinem dritten Gehäuseseitenabschnitt mittels des zweiten Verbindungsmittels 206 befestigt werden. Dabei wird jeweils mittels der Schnittstelle 235, 240 eine elektrische Verbindung des ersten Antriebsmoduls zu dem zweiten Antriebsmodul 30 sichergestellt.

Korrespondierend zu der bogenförmigen Ausgestaltung konzentrisch um die Mittelachse 60 verlaufend ist ebenso die Spulenanordnung 70 (strichliert dargestellt) bogenförmig um die Mittelachse 60 verlaufend angeordnet.

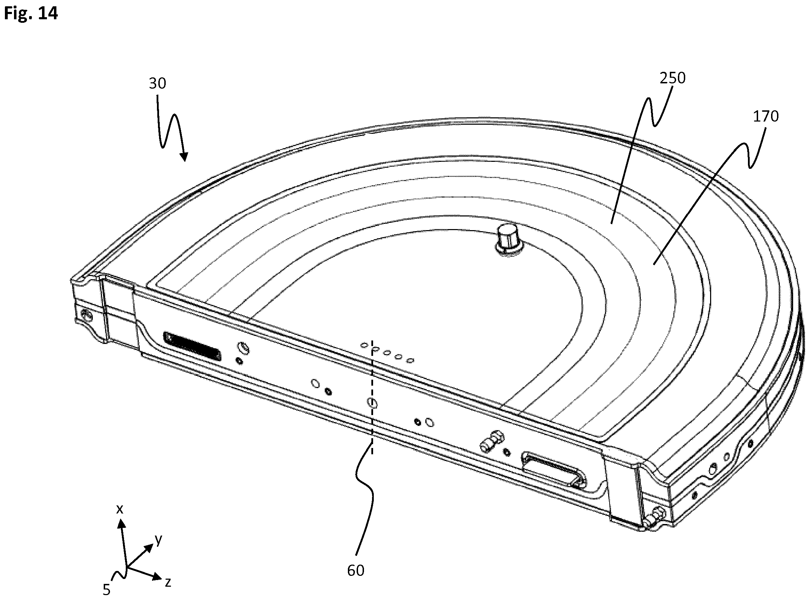

Figur 14 zeigt eine perspektivische Darstellung des zweiten Antriebsmoduls 30.

Das Abdeckelement 170 ist bogenförmig ausgestaltet und verschließt den zweiten Gehäuseinnenraum 250.

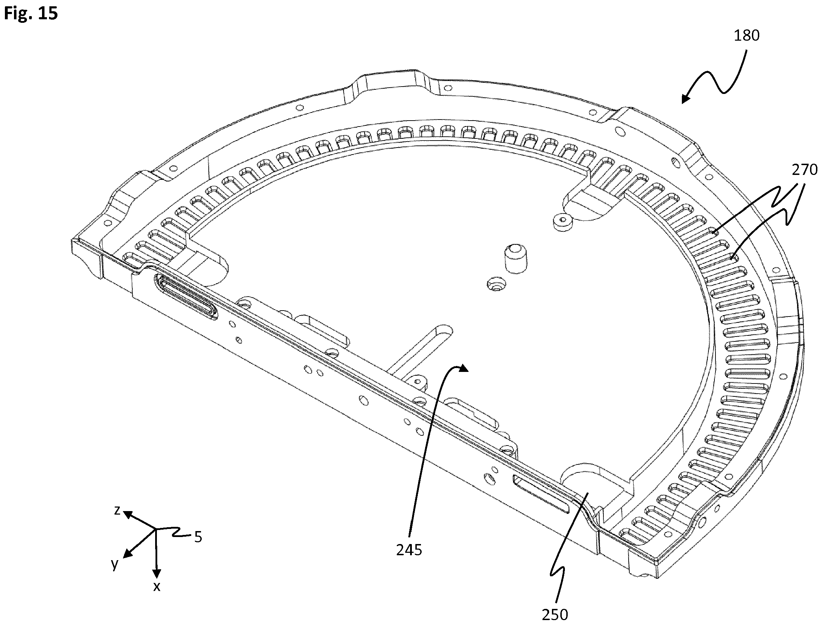

Figur 15 zeigt eine perspektivische Darstellung der ersten Gehäuseschale 180 des zweiten Antriebsmoduls 30.

Die erste Gehäuseschale 180 des zweiten Antriebsmoduls 30 ist im Wesentlichen identisch zu der ersten Gehäuseschale 180 des ersten Antriebsmoduls 25 ausgebildet. Abweichend dazu sind der erste Gehäuseinnenraum 245 und der zweite Gehäuseinnenraum 250 halbkreisförmig bezogen auf die Mittelachse 60 angeordnet. Die ersten Spulenaufnahmen 270 sind auf einer Kreisbahn um die Mittelachse 60 angeordnet.

Durch die in den Figuren beschrieben Ausgestaltung des Lineartransportsystems 10 ist das Antriebsmodul 25, 30 außenseitig glatt ausgebildet und es kann das Antriebsmodul 25, 30 leicht gereinigt werden. Ferner wird eine Ansammlung bzw. ein Eindringen von Verunreinigungen in das Antriebsmodul 25, 30 vermieden.

Durch die Anordnung der Schnittstelle 235, 240 im abgedichteten Bereich zwischen dem ersten Dichtelement 175 und dem dritten Dichtelement 195 wird ein Eindringen von Schmutz oder Feuchtigkeit in die Schnittstelle 235, 240 vermieden. Ferner wird das Eindringen ebenso an dem Übergang zwischen dem Antriebsmodul 25, 30 und der Laufschiene 35 sowie zwischen dem Antriebsmodul 25, 30 und dem Maschinenbett 15 vermieden. Auch wird zuverlässig eine Abdichtung zwischen den einzelnen Antriebsmodulen 25, 30 durch das erste und dritte Dichtelement 175, 195 erzielt. Durch die Anordnung des zweiten Verbindungsmittels 206 im Bereich zwischen dem ersten Dichtelement 175 und dem dritten Dichtelement 195 wird auch ein Zusetzen des zweiten Verbindungsmittels 206 vermieden, so dass das zweite Verbindungsmittel 206 besonders leicht auch nach langer Zeit und in schmutziger Umgebung 290 lösbar ist, so dass eine gute Demontagearbeit des Lineartransportsystems 10, beispielsweise für Wartungsarbeiten, möglich ist.

Durch die hermetische Abdichtung des Lineartransportsystems 10 eignet sich das Lineartransportsystem 10 insbesondere zum Einsatz in der Lebensmittelindustrie oder der chemischen Industrie oder unter Bedingungen, bei denen das Lineartransportsystem 10 hohen Verschmutzungen ausgesetzt ist.

Ferner wird durch die oben beschriebene Ausgestaltung innerhalb des Lineartransportsystems 10 eine Toleranzkette kurz gehalten, sodass das Lineartransportsystem 10 eine besonders hohe Präzision aufweist und leicht montierbar ist.

Durch die innenseitige Anordnung der Spulenanordnung 70 im ersten Gehäuseinnenraum 245 wird eine Korrosion der Spulen 130, insbesondere des weichmagnetischen Materials des Statorzahns 140, 155, insbesondere ein Rostansatz, vermieden.

### Bezugszeichenliste

- 10: Transportsystem
- 15: Maschinenbett
- 20: Fördereinrichtungen
- 25: erstes Antriebsmodul
- 30: zweites Antriebsmodul
- 35: Laufschiene
- 40: Steuergerät
- 45: Antriebseinrichtung
- 50: erster Laufschienenabschnitt
- 55: zweiter Laufschienenabschnitt
- 60: Mittelachse
- 65: Stator
- 70: Spulenanordnung
- 75: Träger
- 80: Magnetanordnung
- 85: Führungsanordnung
- 90: Positionserfassungseinrichtung
- 95: Signalgeber
- 100: erste Außenseite
- 105: erster Magnetanordnungsabschnitt
- 115: Laufrolle
- 120: Wanderfeld
- 125: Gehäuse
- 130: Spule
- 135: Wicklung
- 140: Spulenkern
- 145: erste Stirnfläche
- 150: zweite Stirnfläche
- 155: weiterer Spulenkern
- 160: Isolierung
- 165: erste Aussparung
- 170: Abdeckelement
- 175: erstes Dichtelement
- 180: erste Gehäuseschale
- 185: zweites Dichtelement
- 190: zweite Gehäuseschale
- 195: drittes Dichtelement
- 200: viertes Dichtelement
- 205: erstes Verbindungsmittel
- 206: zweites Verbindungsmittel
- 210: Sensoreinheit
- 215: Sensor
- 220: Sensorleiterplatte
- 225: Verarbeitungseinheit
- 230: Treibereinheit
- 235: erste Schnittstelle
- 240: zweite Schnittstelle
- 245: erster Gehäuseinnenraum
- 250: zweiter Gehäuseinnenraum
- 255: zweite Aussparung
- 260: erster Gehäuseabschnitt
- 265: zweiter Gehäuseabschnitt
- 270: erste Spulenaufnahme
- 275: erster Spulenaufnahmegrund
- 280: erste Spulenaufnahmeseitenfläche
- 285: erste Spulenaufnahmeöffnung
- 290: Umgebung
- 305: dritter Gehäuseabschnitt
- 310: erster Gehäuseseitenabschnitt
- 315: zweiter Gehäuseseitenabschnitt
- 320: dritter Gehäuseseitenabschnitt
- 325: Nut
- 330: dritte Aussparung
- 335: vierter Gehäuseseitenabschnitt
- 340: erster Absatz
- 345: erste Auflagefläche
- 350: zweiter Absatz
- 355: zweite Auflagefläche
- 360: weitere Nut
- 365: vierte Aussparung
- 370: fünfte Aussparung
- 375: erstes Verbindungsprofil
- 376: zweites Verbindungsprofil
- 380: erste Ausbuchtung
- 381: dritte Ausbuchtung
- 385: erste Aufnahme
- 386: zweite Aufnahme
- 390: zweite Ausbuchtung
- 391: Symmetrieebene
- 395: Deckelabschnitt
- 400: zweite Außenseite
- 405: dritte Aufnahme
- 415: Gewindebohrung
- 416: erste Durchführung
- 420: erste Dichtnut
- 421: Spalt
- 425: zweite Dichtnut
- 430: dritte Dichtnut
- 435: Klebschicht
- 440: zweite Spulenaufnahme
- 445: zweiter Spulenaufnahmegrund
- 450: zweite Spulenaufnahmeseitenfläche
- 455: zweite Spulenaufnahmeöffnung
- 460: Vergussmasse

- x: Höhenrichtung
- y: Längsrichtung
- z: Querrichtung

## Patentansprüche

1. Antriebsmodul (25, 30) für ein Lineartransportsystem (10),
- aufweisend ein Gehäuse (125) und einen Stator (65),
- wobei an dem Gehäuse eine Fördereinrichtung (20) des Lineartransportsystems (10) mit einer Magnetanordnung (80) anordnenbar ist,
- wobei das Gehäuse eine erste Gehäuseschale (180) und eine zweite Gehäuseschale (190) umfasst,
- wobei die erste Gehäuseschale (180) und die zweite Gehäuseschale (190) gemeinsam einen ersten Gehäuseinnenraum (245) begrenzen,
- wobei in dem ersten Gehäuseinnenraum (245) der Stator (65) angeordnet ist,
- wobei der Stator (65) wenigstens eine Spulenanordnung (70) mit wenigstens einer Spule (130) mit wenigstens einem Statorzahn (140, 155) umfasst,
- wobei die Spulenanordnung (70) ausgebildet ist, schaltbar ein magnetisches Wanderfeld (120) bereitzustellen,
- wobei der Statorzahn (140, 155) eine erste Stirnfläche (145) und eine zur ersten Stirnfläche (145) gegenüber angeordnete zweite Stirnfläche (150) aufweist,
- wobei die erste Stirnfläche (145) innenseitig der ersten Gehäuseschale (180) und die zweite Stirnfläche (150) innenseitig der zweiten Gehäuseschale (190) angeordnet sind,
- wobei die Gehäuseschalen (180, 190) den Statorzahn (140, 155) gegenüber einer Umgebung (290) abdecken, **dadurch gekennzeichnet, dass**
das Wanderfeld (120) an den Stirnflächen (145, 150) aus der Spulenanordnung (70) austritt und die Gehäuseschalen (180, 190) durchdringt, um außenseitig des Gehäuses (125) zur Ausbildung einer magnetischen Kopplung in Wirkverbindung mit der Magnetanordnung (80) der Fördereinrichtung (20) des Lineartransportsystems (10) zu treten.

2. Antriebsmodul (25, 30) nach Anspruch 1,
- wobei die erste Gehäuseschale (180) eine erste Außenseite (100) und die zweite Gehäuseschale (190) eine zweite Außenseite (400) aufweist,
- wobei die erste Außenseite (100) und/oder die zweite Außenseite (400) im Wesentlichen glatt ausgebildet ist,
- wobei das Gehäuse (125) außenseitig einen Mittelrauwert (Rₐ) aufweist,
- wobei der Mittelrauwert (Rₐ) in einem Bereich von 0,2 µm bis 0,8 µm, insbesondere in einem Bereich von 0,4 µm bis 0,8 µm, liegt,
und/oder
- wobei die erste Gehäuseschale (180) eine erste Außenseite (100) und die zweite Gehäuseschale (190) eine zweite Außenseite (400) aufweist,
- wobei die erste Außenseite (100) im Bereich der Spulenanordnung (70) angeordnet ist,
- wobei die erste Außenseite (100) im Wesentlichen plan ausgebildet ist,
- und/oder
- wobei das Gehäuse (125) ein Dichtelement (175, 195) aufweist,
- wobei das Dichtelement (175, 195) umlaufend am Gehäuse (125) angeordnet ist,
- wobei das Dichtelement (175, 195) ausgebildet ist, einen Spalt (421) zwischen dem Antriebsmodul (25, 30) und einer weiteren Komponente, insbesondere einem weiteren Antriebsmodul (25, 30) des Lineartransportsystems (10), abzudichten.

3. Antriebsmodul (25, 30) nach einem der vorhergehenden Ansprüche,
- wobei die erste Gehäuseschale (180) eine erste Außenseite (100) und die zweite Gehäuseschale (190) eine zweite Außenseite (400) aufweist,
- wobei die erste Gehäuseschale (180) eine erste Spulenaufnahme (270) aufweist,
- wobei die erste Spulenaufnahme (270) einen ersten Spulenaufnahmegrund (275) aufweist,
- wobei der erste Spulenaufnahmegrund (275) zwischen der ersten Außenseite (100) und der ersten Stirnseite (145) des Statorzahns (140, 155) angeordnet ist und den ersten Gehäuseinnenraum (245) gegenüber der Umgebung (290) abtrennt,
- wobei die erste Spulenaufnahme (270) zumindest abschnittsweise korrespondierend zu der Spule (130), insbesondere zu dem Statorzahn (140, 155), ausgebildet ist,
- wobei die Spule (130), insbesondere der Statorzahn (140, 155), in die erste Spulenaufnahme (270) eingreift und vorzugsweise mit der ersten Stirnfläche (145) an dem ersten Spulenaufnahmegrund (275) anliegt,
- wobei die zweite Gehäuseschale (190) eine gegenüberliegend zur ersten Spulenaufnahme (270) angeordnete zweite Spulenaufnahme (440) aufweist,
- wobei die zweite Spulenaufnahme (440) einen zweiten Spulenaufnahmegrund (445) aufweist,
- wobei der zweite Spulenaufnahmegrund (445) zwischen der zweiten Außenseite (400) und der zweiten Stirnseite (150) des Statorzahns (140, 155) angeordnet ist und den ersten Gehäuseinnenraum (245) gegenüber der Umgebung (290) abtrennt,
- wobei die zweite Spulenaufnahme (440) zumindest abschnittsweise korrespondierend zu der Spule (130), vorzugsweise dem Statorzahn (140, 155), ausgebildet ist,
- wobei die Spule (130), insbesondere der Statorzahn (140, 155), in die zweite Spulenaufnahme (440)eingreift und vorzugsweise mit der zweiten Stirnfläche (150) an dem zweiten Spulenaufnahmegrund (445) anliegt.

4. Antriebsmodul (25, 30) nach Anspruch 3,
- wobei wenigstens eine der beiden Spulenaufnahmen (270, 440) eine Spulenaufnahmeseitenfläche (280, 450) und eine Spulenaufnahmeöffnung (285, 455) aufweist,
- wobei die Spulenaufnahmeseitenfläche (280, 450) von der Spulenaufnahmeöffnung (285, 450) hin zum Spulenaufnahmegrund (275, 445) zumindest abschnittweise verjüngend ausgebildet ist.

5. Antriebsmodul (25, 30) nach Anspruch 4,
- wobei für jede Spule (130), insbesondere für jeden Statorzahn (140, 155), jeweils die erste Spulenaufnahme (270) und die zweite Spulenaufnahme (440) vorgesehen ist.

6. Antriebsmodul (25, 30) nach einem der Ansprüche 3 bis 5,
- wobei die Spule (130) eine Wicklung (135) um den Statorzahn (140, 155) und eine elektrische Isolierung (160) umfasst,
- wobei die Isolierung (160) plattenartig ausgebildet ist und wenigstens eine erste Aussparung (165) aufweist,
- wobei die erste Aussparung (165) korrespondierend zum Statorzahn (140, 155) ausgebildet ist,
- wobei der Statorzahn (140, 155) die erste Aussparung (165) durchgreift,
- wobei die Isolierung (160) zumindest zwischen einer der beiden Gehäuseschalen (180, 190) und der Wicklung (135) angeordnet ist und die Wicklung elektrisch gegenüber dem Gehäuse (125) isoliert.

7. Antriebsmodul (25, 30) nach einem der vorhergehenden Ansprüche,
- aufweisend eine Sensoreinheit (210) zur Ermittlung einer Position der Fördereinrichtung (20) an dem Antriebsmodul (25, 30),
- wobei die erste Gehäuseschale (180) auf einer zum ersten Gehäuseinnenraum (245) abgewandten Seite einen zweiten Gehäuseinnenraum (250) zumindest abschnittsweise begrenzt,
- wobei in dem zweiten Gehäuseinnenraum (250) die Sensoreinheit (210) angeordnet ist.

8. Antriebsmodul (25, 30) nach Anspruch 7,
- wobei das Gehäuse (125) ein Abdeckelement (170) und die Sensoreinheit (210) einen Sensor (215) umfasst,
- wobei das Abdeckelement (170) an der ersten Außenseite (100) der ersten Gehäuseschale (180) angeordnet ist und den zweiten Gehäuseinnenraum (250) gegenüber der Umgebung (290) verschließt,
- wobei der Sensor (215) angrenzend an das Abdeckelement (170) angeordnet ist,
- wobei vorzugsweise das Abdeckelement (170) folienartig ausgebildet ist,
- wobei vorzugsweise das Abdeckelement (170) flächig mit der ersten Außenseite (100) verklebt ist.

9. Antriebsmodul (25, 30) nach einem der vorhergehenden Ansprüche,
- wobei das Gehäuse (125) wenigstens ein erstes Verbindungsprofil (375) und ein zweites Verbindungsprofil (376) zur Positionierung der zweiten Gehäuseschale (190) relativ zur ersten Gehäuseschale (180) aufweist,
- wobei das erste Verbindungsprofil (375) an der einen Gehäuseschale (180) und das zweite Verbindungsprofil (376) an der anderen Gehäuseschale (190) angeordnet ist,
- wobei das erste Verbindungsprofil (375) wenigstens eine Ausbuchtung (380) und das zweite Verbindungsprofil (376) eine zur Ausbuchtung (380) korrespondierend ausgebildete Aufnahme (386) aufweist,
- wobei die Ausbuchtung (380) sich in Richtung der anderen Gehäuseschale (190) erstreckt,
- wobei die Ausbuchtung (380) in die Aufnahme (386) eingreift und eine Position der zweiten Gehäuseschale (190) relativ zu der ersten Gehäuseschale (180) zumindest in eine erste Richtung festlegt.

10. Antriebsmodul (25, 30) nach Anspruch 9,
- wobei das erste Verbindungsprofil (375) wenigstens eine weitere Ausbuchtung (390) und das zweite Verbindungsprofil eine zur weiteren Ausbuchtung (390) korrespondierend ausgebildete weitere Aufnahme (405) aufweist,
- wobei die weitere Ausbuchtung (390) an der einen Gehäuseschale (180) und die weitere Aufnahme (405) an der anderen Gehäuseschale (190) angeordnet sind,
- wobei die weitere Ausbuchtung (390) sich in Richtung der anderen Gehäuseschale (190) erstreckt,
- wobei vorzugsweise die Ausbuchtung (380) und die weitere Ausbuchtung (390) unterschiedlich zueinander ausgebildet sind,
- wobei die Aufnahme (386) und die weitere Aufnahme (405) vorzugsweise unterschiedlich zueinander ausgebildet sind,
- wobei die Aufnahme (386) und die Ausbuchtung (380) an einem Gehäuseseitenabschnitt (310, 315) des Gehäuses (125) angeordnet sind,
- wobei die weitere Aufnahme (405) und die weitere Ausbuchtung (390) an einem weiteren Gehäuseseitenabschnitt (320, 335) des Gehäuses (125) angeordnet sind,
- wobei vorzugsweise der Gehäuseseitenabschnitt (310, 315) und der weitere Gehäuseseitenabschnitt (320, 335) aneinander angrenzen,
- wobei die weitere Ausbuchtung (390) in die weitere Aufnahme (405) eingreift und eine Position der zweiten Gehäuseschale (190) relativ zu der ersten Gehäuseschale (180) zumindest in eine zweite Richtung quer zu der ersten Richtung festlegt.

11. Antriebsmodul (25, 30) nach Anspruch 9 oder 10,
- wobei ein Verbindungsmittel (205) vorgesehen ist,
- wobei das Verbindungsmittel (205) an der Ausbuchtung (380) angeordnet ist,
- wobei vorzugsweise das Verbindungsmittel (205) mittig bezogen auf eine maximale Erstreckung (h) eines der Komponente zugewandten Gehäuseseitenabschnitts (310) des Gehäuses (125) angeordnet ist.

12. Lineartransportsystem (10),
- aufweisend ein Antriebsmodul (25, 30), wenigstens eine Fördereinrichtung (20) und eine Laufschiene (35),
- wobei das Antriebsmodul (25, 30) nach einem der vorhergehenden Ansprüche ausgebildet ist,
- wobei die Laufschiene (35) an dem Antriebsmodul (25, 30) befestigt ist,
- wobei die Fördereinrichtung (20) eine Führungsanordnung (85) mit wenigstens einer Laufrolle (115) und wenigstens eine versetzt zu der Laufrolle (115) angeordnete Magnetanordnung (80) umfasst,
- wobei die Laufrolle (115) zur Führung der Fördereinrichtung (20) entlang der Laufschiene (35) an der Laufschiene (35) anliegt,
- wobei zum Antrieb der Fördereinrichtung (20) die Magnetanordnung (80) außenseitig des Gehäuses (125) im Wanderfeld (120) der Spulenanordnung (70) anordenbar ist.

13. Lineartransportsystem (10) nach Anspruch 12,
- wobei die Fördereinrichtung (20) einen Signalbeeinflusser (95) umfasst,
- wobei der Signalbeeinflusser (95) außenseitig an dem Abdeckelement (170) angeordnet ist und ausgebildet ist, ein Signal dem Sensor (215) bereitzustellen,
- wobei der Sensor (215) ausgebildet ist, das Signal zu erfassen und der Verarbeitungseinheit (225) bereitzustellen,
- wobei die Verarbeitungseinheit (225) ausgebildet ist, auf Grundlage des bereitgestellten Signals eine Position der Fördereinrichtung (20) an dem Antriebsmodul (25, 30) zu ermitteln.

14. Lineartransportsystem (10) nach Anspruch 12 oder 13,
- aufweisend ein weiteres Antriebsmodul (25, 30) nach einem der Ansprüche 1 bis 11,
- wobei zwischen den Gehäusen (125) der Antriebsmodule ein weiterer Statorzahn (155) angeordnet ist, wobei der weitere Statorzahn (155) vorzugsweise in einem Nutraum (325, 360), der in den aneinander angrenzenden Gehäuseseitenabschnitten (320, 335) der Gehäuse ausgebildet ist, angeordnet ist.

15. Lineartransportsystem (10) nach einem der Ansprüche 12 bis 14,
- aufweisend eine Vielzahl von Fördereinrichtungen (20),
- wobei die Fördereinrichtungen (20) vorzugsweise identisch zueinander ausgebildet sind,
- wobei die Fördereinrichtungen (20) durch das Antriebsmodul (25, 30) angetrieben werden.

## Claims

1. A drive module (25, 30) for a linear transport system (10),
- comprising a housing (125) and a stator (65),
- wherein a conveying device (20) of the linear transport system (10) with a magnet arrangement (80) can be arranged on the housing,
- wherein the housing comprises a first housing shell (180) and a second housing shell (190),
- wherein the first housing shell (180) and the second housing shell (190) together delimit a first housing interior (245),
- wherein the stator (65) is arranged in the first housing interior (245),
- wherein the stator (65) comprises at least one coil arrangement (70) having at least one coil (130) with at least one stator tooth (140, 155),
- wherein the coil arrangement (70) is designed to switchably provide a magnetic traveling field (120),
- wherein the stator tooth (140, 155) has a first end face (145) and a second end face (150) which is arranged opposite the first end face (145),
- wherein the first end face (145) is arranged on the inner side of the first housing shell (180) and the second end face (150) is arranged on the inner side of the second housing shell (190),
- wherein the housing shells (180, 190) cover the stator tooth (140, 155) in relation to a surrounding area (290),
**characterized in that**
the traveling field (120) exits from the coil arrangement (70) at the end faces (145, 150) and passes through the housing shells (180, 190) in order to enter into operative connection with the magnet arrangement (80) of the conveying device (20) of the linear transport system (10) on the outer side of the housing (125) for the purpose of forming a magnetic coupling.

2. The drive module (25, 30) as claimed in claim 1,
- wherein the first housing shell (180) has a first outer side (100) and the second housing shell (190) has a second outer side (400),
- wherein the first outer side (100) and/or the second outer side (400) are of substantially smooth design,
- wherein the housing (125) has a mean roughness value (Rₐ) on the outer side,
- wherein the mean roughness value (Rₐ) lies in a range of 0.2 µm to 0.8 µm, in particular in a range of 0.4 µm to 0.8 µm
and/or
- wherein the first housing shell (180) has a first outer side (100) and the second housing shell (190) has a second outer side (400),
- wherein the first outer side (100) is arranged in the region of the coil arrangement (70),
- wherein the first outer side (100) is of substantially planar design,
and/or
- wherein the housing (125) has a sealing element (175, 195),
- wherein the sealing element (175, 195) is arranged in an encircling manner on the housing (125),
- wherein the sealing element (175, 195) is designed to seal off a gap (421) between the drive module (25, 30) and a further component, in particular a further drive module (25, 30) of the linear transport system (10).

3. The drive module (25, 30) as claimed in either of the preceding claims,
- wherein the first housing shell (180) has a first outer side (100) and the second housing shell (190) has a second outer side (400),
- wherein the first housing shell (180) has a first coil receptacle (270),
- wherein the first coil receptacle (270) has a first coil receptacle base (275),
- wherein the first coil receptacle base (275) is arranged between the first outer side (100) and the first end side (145) of the stator tooth (140, 155) and separates the first housing interior (245) from the surrounding area (290),
- wherein the first coil receptacle (270) is designed at least in sections in a manner corresponding to the coil (130), in particular to the stator tooth (140, 155),
- wherein the coil (130), in particular the stator tooth (140, 155), engages into the first coil receptacle (270) and preferably bears against the first coil receptacle base (275) by way of the first end face (145),
- wherein the second housing shell (190) has a second coil receptacle (440) which is arranged opposite the first coil receptacle (270),
- wherein the second coil receptacle (440) has a second coil receptacle base (445),
- wherein the second coil receptacle base (445) is arranged between the second outer side (400) and the second end side (150) of the stator tooth (140, 155) and separates the first housing interior (245) from the surrounding area (290),
- wherein the second coil receptacle (440) is designed at least in sections so as to correspond to the coil (130), preferably the stator tooth (140, 155),
- wherein the coil (130), in particular the stator tooth (140, 155), engages into the second coil receptacle (440) and preferably bears against the second coil receptacle base (445) by way of the second end face (150).

4. The drive module (25, 30) as claimed in claim 3,
- wherein at least one of the two coil receptacles (270, 440) has a coil receptacle side face (280, 450) and a coil receptacle opening (285, 455),
- wherein the coil receptacle side face (280, 450) is designed at least in sections so as to taper from the coil receptacle opening (285, 450) toward the coil receptacle base (275, 445).

5. The drive module (25, 30) as claimed in claim 4,
- wherein the first coil receptacle (270) and the second coil receptacle (440) are in each case provided for each coil (130), in particular for each stator tooth (140, 155).

6. The drive module (25, 30) as claimed in one of claims 3 to 5,
- wherein the coil (130) comprises a winding (135) around the stator tooth (140, 155) and an electrical insulation (160),
- wherein the insulation (160) is of plate-like design and has at least one first cutout (165),
- wherein the first cutout (165) is designed so as to correspond to the stator tooth (140, 155)
- wherein the stator tooth (140, 155) passes through the first cutout (165),
- wherein the insulation (160) is arranged at least between one of the two housing shells (180, 190) and the winding (135) and the winding is electrically insulated from the housing (125).

7. The drive module (25, 30) as claimed in one of the preceding claims,
- having a sensor unit (210) for ascertaining a position of the conveying device (20) on the drive module (25, 30),
- wherein the first housing shell (180), on a side averted from the first housing interior (245), delimits a second housing interior (250) at least in sections,
- wherein the sensor unit (210) is arranged in the second housing interior (250).

8. The drive module (25, 30) as claimed in claim 7,
- wherein the housing (125) comprises a covering element (170) and the sensor unit (210) comprises a sensor (215),
- wherein the covering element (170) is arranged on the first outer side (100) of the first housing shell (180) and closes the second housing interior (250) in relation to the surrounding area (290),
- wherein the sensor (215) is arranged so as to adjoin the covering element (170),
- wherein the covering element (170) is preferably of film-like design,
- wherein the covering element (170) is preferably surface-to-surface bonded to the first outer side (100) .

9. The drive module (25, 30) as claimed in one of the preceding claims,
- wherein the housing (125) has at least one first connecting profile (375) and one second connecting profile (376) for positioning the second housing shell (190) relative to the first housing shell (180),
- wherein the first connecting profile (375) is arranged on one housing shell (180) and the second connecting profile (376) is arranged on the other housing shell (190),
- wherein the first connecting profile (375) has at least one protrusion (380) and the second connecting profile (376) has a receptacle (386) which is designed so as to correspond to the protrusion (380),
- wherein the protrusion (380) extends in the direction of the other housing shell (190),
- wherein the protrusion (380) engages into the receptacle (386) and defines a position of the second housing shell (190) relative to the first housing shell (180) at least in a first direction.

10. The drive module (25, 30) as claimed in claim 9,
- wherein the first connecting profile (375) has at least one further protrusion (390) and the second connecting profile has a further receptacle (405) which is designed so as to correspond to the further protrusion (390),
- wherein the further protrusion (390) is arranged on one housing shell (180) and the further receptacle (405) is arranged on the other housing shell (190),
- wherein the further protrusion (390) extends in the direction of the other housing shell (190),
- wherein the protrusion (380) and the further protrusion (390) are preferably designed differently from one another,
- wherein the receptacle (386) and the further receptacle (405) are preferably designed differently from one another,
- wherein the receptacle (386) and the protrusion (380) are arranged on a housing side section (310, 315) of the housing (125),
- wherein the further receptacle (405) and the further protrusion (390) are arranged on a further housing side section (320, 335) of the housing (125),
- wherein the housing side section (310, 315) and the further housing side section (320, 335) preferably adjoin one another,
- wherein the further protrusion (390) engages into the further receptacle (405) and defines a position of the second housing shell (190) relative to the first housing shell (180) at least in a second direction transversely to the first direction.

11. The drive module (25, 30) as claimed in claim 9 or 10,
- wherein a connecting means (205) is provided,
- wherein the connecting means (205) is arranged on the protrusion (380),
- wherein the connecting means (205) is preferably arranged centrally with respect to a maximum extent (h) of a housing side section (310) of the housing (125) that faces the component.

12. A linear transport system (10),
- having a drive module (25, 30), at least one conveying device (20) and a running rail (35),
- wherein the drive module (25, 30) is designed as claimed in one of the preceding claims,
- wherein the running rail (35) is fastened to the drive module (25, 30),
- wherein the conveying device (20) comprises a guide arrangement (85) having at least one running roller (115) and at least one magnet arrangement (80) which is arranged offset in relation to the running roller (115),
- wherein the running roller (115) bears against the running rail (35) for the purpose of guiding the conveying device (20) along the running rail (35),
- wherein the magnet arrangement (80) can be arranged on the outer side of the housing (125) in the traveling field (120) of the coil arrangement (70) for the purpose of driving the conveying device (20) .

13. The linear transport system (10) as claimed in claim 12,
- wherein the conveying device (20) comprises a signal influencer (95),
- wherein the signal influencer (95) is arranged on the outer side of the covering element (170) and is designed to provide a signal to the sensor (215),
- wherein the sensor (215) is designed to detect the signal and to provide it to the processing unit (225),
- wherein the processing unit (225) is designed to ascertain a position of the conveying device (20) on the drive module (25, 30) on the basis of the provided signal.

14. The linear transport system (10) as claimed in claim 12 or 13,
- having a further drive module (25, 30) as claimed in one of claims 1 to 11,
- wherein a further stator tooth (155) is arranged between the housings (125) of the drive modules, wherein the further stator tooth (155) is preferably arranged in a groove space (325, 360) which is formed in mutually adjoining housing side sections (320, 335) of the housings.

15. The linear transport system (10) as claimed in one of claims 12 to 14,
- having a large number of conveying devices (20),
- wherein the conveying devices (20) are preferably designed identically to one another,
- wherein the conveying devices (20) are driven by the drive module (25, 30).

## Revendications

1. Module d'entraînement (25, 30) pour un système de transport linéaire (10),
- présentant un boîtier (125) et un stator (65),
- un dispositif de convoyage (20) du système de transport linéaire (10) avec un agencement d'aimants (80) pouvant être disposé au niveau du boîtier,
- le boîtier comprenant une première coque de boîtier (180) et une deuxième coque de boîtier (190),
- la première coque de boîtier (180) et la deuxième coque de boîtier (190) délimitant ensemble un premier espace intérieur de boîtier (245),
- le stator (65) étant disposé dans le premier espace intérieur de boîtier (245),
- le stator (65) comprenant au moins un agencement de bobine (70) avec au moins une bobine (130) avec au moins une dent statorique (140, 155),
- l'agencement de bobine (70) étant réalisé de manière à fournir de manière commutable un champ magnétique mobile (120),
- la dent statorique (140, 155) présentant une première surface frontale (145) et une deuxième surface frontale (150) disposée à l'opposé de la première surface frontale (145),
- la première surface frontale (145) étant disposée du côté intérieur de la première coque de boîtier (180) et la deuxième surface frontale (150) étant disposée du côté intérieur de la deuxième coque de boîtier (190),
- les coques de boîtier (180, 190) recouvrant la dent statorique (140, 155) par rapport à un environnement (290),
**caractérisé en ce que**
le champ mobile (120) sort de l'agencement de bobine (70) au niveau des surfaces frontales (145, 150) et traverse les coques de boîtier (180, 190), afin d'entrer en liaison fonctionnelle du côté extérieur du boîtier (125) avec l'agencement d'aimants (80) du dispositif de convoyage (20) du système de transport linéaire (10) pour créer un accouplement magnétique.

2. Module d'entraînement (25, 30) selon la revendication 1, dans lequel
- la première coque de boîtier (180) présente un premier côté extérieur (100) et la deuxième coque de boîtier (190) présente un deuxième côté extérieur (400),
- le premier côté extérieur (100) et/ou le deuxième côté extérieur (400) est réalisé sous forme essentiellement lisse,
- le boîtier (125) présente, du côté extérieur, une rugosité moyenne (Rₐ),
- la rugosité moyenne (Rₐ) est située dans une plage de 0,2 µm à 0,8 µm, en particulier dans une plage de 0,4 µm à 0,8 µm,
et/ou
- la première coque de boîtier (180) présente un premier côté extérieur (100) et la deuxième coque de boîtier (190) présente un deuxième côté extérieur (400),
- le premier côté extérieur (100) est disposé dans la région de l'agencement de bobine (70),
- le premier côté extérieur (100) est réalisé sous forme essentiellement plane,
et/ou
- le boîtier (125) présente un élément d'étanchéité (175, 195),
- l'élément d'étanchéité (175, 195) est disposé au niveau du boîtier (125) sur la périphérie,
- l'élément d'étanchéité (175, 195) est réalisé de manière à étanchéifier une fente (421) entre le module d'entraînement (25, 30) et un composant supplémentaire, en particulier un module d'entraînement supplémentaire (25, 30) du système de transport linéaire (10).

3. Module d'entraînement (25, 30) selon l'une quelconque des revendications précédentes, dans lequel
- la première coque de boîtier (180) présente un premier côté extérieur (100) et la deuxième coque de boîtier (190) présente un deuxième côté extérieur (400),
- la première coque de boîtier (180) présente un premier logement de bobine (270),
- le premier logement de bobine (270) présente un premier fond de logement de bobine (275),
- le premier fond de logement de bobine (275) est disposé entre le premier côté extérieur (100) et le premier côté frontal (145) de la dent statorique (140, 155) et sépare le premier espace intérieur de boîtier (245) vis-à-vis de l'environnement (290),
- le premier logement de bobine (270) est réalisé de manière à correspondre au moins en partie à la bobine (130), en particulier à la dent statorique (140, 155),
- la bobine (130), en particulier la dent statorique (140, 155), s'engage dans le premier logement de bobine (270) et s'applique de préférence avec la première surface frontale (145) contre le premier fond de logement de bobine (275),
- la deuxième coque de boîtier (190) présente un deuxième logement de bobine (440) disposé à l'opposé du premier logement de bobine (270),
- le deuxième logement de bobine (440) présente un deuxième fond de logement de bobine (445),
- le deuxième fond de logement de bobine (445) est disposé entre le deuxième côté extérieur (400) et le deuxième côté frontal (150) de la dent statorique (140, 155) et sépare le premier espace intérieur de boîtier (245) vis-à-vis de l'environnement (290),
- le deuxième logement de bobine (440) est réalisé de manière à correspondre au moins en partie à la bobine (130), de préférence à la dent statorique (140, 155),
- la bobine (130), en particulier la dent statorique (140, 155), s'engage dans le deuxième logement de bobine (440) et s'applique de préférence avec la deuxième surface frontale (150) contre le deuxième fond de logement de bobine (445).

4. Module d'entraînement (25, 30) selon la revendication 3, dans lequel
- au moins l'un des deux logements de bobine (270, 440) présente une surface latérale de logement de bobine (280, 450) et une ouverture de logement de bobine (285, 455),
- la surface latérale de logement de bobine (280, 450) est réalisée de manière à se rétrécir au moins en partie depuis l'ouverture de logement de bobine (285, 450) vers le fond de logement de bobine (275, 445).

5. Module d'entraînement (25, 30) selon la revendication 4, dans lequel
- pour chaque bobine (130), en particulier pour chaque dent statorique (140, 155), il est prévu à chaque fois le premier logement de bobine (270) et le deuxième logement de bobine (440).

6. Module d'entraînement (25, 30) selon l'une quelconque des revendications 3 à 5, dans lequel
- la bobine (130) comprend un enroulement (135) autour de la dent statorique (140, 155) et une isolation électrique (160),
- l'isolation (160) est réalisée en forme de plaque et présente au moins un premier évidement (165),
- le premier évidement (165) est réalisé de manière à correspondre à la dent statorique (140, 155),
- la dent statorique (140, 155) s'engage à travers le premier évidement (165),
- l'isolation (160) est disposée au moins entre l'une des deux coques de boîtier (180, 190) et l'enroulement (135), et isole l'enroulement électriquement par rapport au boîtier (125).

7. Module d'entraînement (25, 30) selon l'une quelconque des revendications précédentes,
- présentant une unité de capteur (210) pour déterminer une position du dispositif de convoyage (20) au niveau du module d'entraînement (25, 30),
- la première coque de boîtier (180) délimitant au moins en partie un deuxième espace intérieur de boîtier (250) sur un côté opposé au premier espace intérieur de boîtier (245),
- l'unité de capteur (210) étant disposée dans le deuxième espace intérieur de boîtier (250).

8. Module d'entraînement (25, 30) selon la revendication 7, dans lequel
- le boîtier (125) comprend un élément de recouvrement (170) et l'unité de capteur (210) comprend un capteur (215),
- l'élément de recouvrement (170) est disposé au niveau du premier côté extérieur (100) de la première coque de boîtier (180) et ferme le deuxième espace intérieur de boîtier (250) par rapport à l'environnement (290),
- le capteur (215) est disposé en position adjacente à l'élément de recouvrement (170),
- de préférence, l'élément de recouvrement (170) est réalisé en forme de feuille,
- de préférence, l'élément de recouvrement (170) est collé à plat avec le premier côté extérieur (100) .

9. Module d'entraînement (25, 30) selon l'une quelconque des revendications précédentes, dans lequel
- le boîtier (125) présente au moins un premier profil de connexion (375) et un deuxième profil de connexion (376) pour le positionnement de la deuxième coque de boîtier (190) par rapport à la première coque de boîtier (180),
- le premier profil de connexion (375) est disposé au niveau de l'une des coques de boîtier (180) et le deuxième profil de connexion (376) est disposé au niveau de l'autre coque de boîtier (190),
- le premier profil de connexion (375) présente au moins un renflement (380) et le deuxième profil de connexion (376) présente un logement (386) réalisé de manière à correspondre au renflement (380),
- le renflement (380) s'étend dans la direction de l'autre coque de boîtier (190),
- le renflement (380) s'engage dans le logement (386) et fixe une position de la deuxième coque de boîtier (190) par rapport à la première coque de boîtier (180) au moins dans une première direction.

10. Module d'entraînement (25, 30) selon la revendication 9, dans lequel
- le premier profil de connexion (375) présente au moins un renflement supplémentaire (390) et le deuxième profil de connexion présente un logement supplémentaire (405) réalisé de manière à correspondre au renflement supplémentaire (390),
- le renflement supplémentaire (390) est disposé au niveau de l'une des coques de boîtier (180) et le logement supplémentaire (405) est disposé au niveau de l'autre coque de boîtier (190),
- le renflement supplémentaire (390) s'étend dans la direction de l'autre coque de boîtier (190),
- de préférence, le renflement (380) et le renflement supplémentaire (390) sont réalisés de manière différente l'un de l'autre,
- le logement (386) et le logement supplémentaire (405) sont de préférence réalisés de manière différente l'un de l'autre,
- le logement (386) et le renflement (380) sont disposés au niveau d'une portion latérale de boîtier (310, 315) du boîtier (125),
- le logement supplémentaire (405) et le renflement supplémentaire (390) sont disposés au niveau d'une portion latérale de boîtier supplémentaire (320, 335) du boîtier (125),
- de préférence la portion latérale de boîtier (310, 315) et la portion latérale de boîtier supplémentaire (320, 335) sont adjacentes l'une à l'autre,
- le renflement supplémentaire (390) s'engage dans le logement supplémentaire (405) et fixe une position de la deuxième coque de boîtier (190) par rapport à la première coque de boîtier (180) au moins dans une deuxième direction transversalement à la première direction.

11. Module d'entraînement (25, 30) selon la revendication 9 ou 10, dans lequel
- un moyen de connexion (205) est prévu,
- le moyen de connexion (205) est disposé au niveau du renflement (380),
- de préférence le moyen de connexion (205) est disposé centralement par rapport à une étendue maximale (h) d'une portion latérale de boîtier (310) du boîtier (125) tournée vers le composant.

12. Système de transport linéaire (10),
- présentant un module d'entraînement (25, 30), au moins un dispositif de convoyage (20) et un rail de roulement (35),
- le module d'entraînement (25, 30) étant réalisé selon l'une quelconque des revendications précédentes,
- le rail de roulement (35) étant fixé au module d'entraînement (25, 30),
- le dispositif de convoyage (20) comprenant un agencement de guidage (85) avec au moins un galet de roulement (115) et au moins un agencement d'aimants (80) disposé de manière décalée par rapport au galet de roulement (115),
- le galet de roulement (115) s'appliquant contre le rail de roulement (35) pour guider le dispositif de convoyage (20) le long du rail de roulement (35),
- pour l'entraînement du dispositif de convoyage (20), l'agencement d'aimants (80) pouvant être disposé du côté extérieur du boîtier (125) dans le champ mobile (120) de l'agencement de bobine (70) .

13. Système de transport linéaire (10) selon la revendication 12, dans lequel
- le dispositif de convoyage (20) comprend un influenceur de signal (95),
- l'influenceur de signal (95) est disposé du côté extérieur au niveau de l'élément de recouvrement (170), et est réalisé pour fournir un signal au capteur (215),
- le capteur (215) est réalisé pour détecter le signal et pour le fournir à l'unité de traitement (225),
- l'unité de traitement (225) est réalisée pour déterminer, sur la base du signal fourni, une position du dispositif de convoyage (20) au niveau du module d'entraînement (25, 30).

14. Système de transport linéaire (10) selon la revendication 12 ou 13,
- présentant un module d'entraînement supplémentaire (25, 30) selon l'une quelconque des revendications 1 à 11,
- une dent statorique supplémentaire (155) étant disposée entre les boîtiers (125) des modules d'entraînement, la dent statorique supplémentaire (155) étant disposée de préférence dans un espace de rainure (325, 360) qui est réalisé dans les portions latérales de boîtiers adjacentes l'une à l'autre (320, 335) des boîtiers.

15. Système de transport linéaire (10) selon l'une quelconque des revendications 12 à 14,
- présentant une pluralité de dispositifs de convoyage (20),
- les dispositifs de convoyage (20) étant de préférence réalisés de manière identique les uns aux autres,
- les dispositifs de convoyage (20) étant entraînés par le module d'entraînement (25, 30).
